(19) Europäisches Patentamt
European Patent Office
Office européen des brevets

(11) **EP 4 668 886 A1**

(12) **EUROPEAN PATENT APPLICATION**
published in accordance with Art. 153(4) EPC

(43) Date of publication:
**24.12.2025 Bulletin 2025/52**

(21) Application number: **24755882.8**

(22) Date of filing: **17.01.2024**

(51) International Patent Classification (IPC):
***H04W 52/02*** (2009.01)

(52) Cooperative Patent Classification (CPC):
**H04W 36/00; H04W 52/02;** Y02D 30/70

(86) International application number:
**PCT/CN2024/072750**

(87) International publication number:
**WO 2024/169507 (22.08.2024 Gazette 2024/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **17.02.2023 CN 202310131603
27.04.2023 CN 202310472047**

(71) Applicant: **Datang Mobile Communications
Equipment Co., Ltd.
Beijing 100085 (CN)**

(72) Inventors:
• **LIU, Miaomiao
  Beijing 100085 (CN)**
• **YANG, Meiying
  Beijing 100085 (CN)**
• **WANG, Jiaqing
  Beijing 100085 (CN)**

(74) Representative: **Studio Torta S.p.A.
Via Viotti, 9
10121 Torino (IT)**

(54) **SIGNAL MEASUREMENT METHOD AND APPARATUS, AND DEVICE**

(57) The present disclosure provides a signal measurement method and apparatus, and a device. The method is applied to a terminal, and comprises: receiving a signal sent by a network device, the signal comprising a first signal and/or a second signal; and performing measurement on the first signal, and/or performing measurement on the second signal to obtain a measurement result.

Receiving a signal transmitted from a network device, where the signal includes a first signal and/or a second signal — S21

Measuring the first signal, and/or measuring the second signal, to obtain a measurement result — S22

FIG. 2

EP 4 668 886 A1

**Description**

CROSS-REFERENCES TO RELATED APPLICATIONS

The present application claims priority to Chinese Patent Application No. 202310131603.4 filed on February 17, 2023, entitled "Signal Measurement Method and Apparatus, and Device", and Chinese Patent Application No. 202310472047.7 filed on April 27, 2023, entitled "Signal Measurement Method and Apparatus, and Device", which are hereby incorporated by reference in their entireties.

FIELD

The present application relates to the field of communications, and in particular, to methods and apparatuses for signal measurement, and devices.

BACKGROUND

In case that a terminal moves in different cells, a channel condition around the terminal changes. The terminal needs to select a suitable cell for handover, and a handover procedure involves mobility management for the terminal.

In the mobility management for the terminal, in order to support mobility of the terminal and timely obtain channel conditions of cells around the terminal, a network device may configure the terminal to perform a radio resource management (RRM). Traditionally, the terminal is woken up once in each discontinuous transmission (DRX) cycle to perform the RRM measurement.

However, a traditional RRM measurement solution obtains a limited RRM measurement quantity during each measurement procedure, which increases a number of RRM measurements after the terminal is woken up, resulting in higher energy consumption of the terminal.

BRIEF SUMMARY

Embodiments of the present application provide methods and apparatuses for signal measurement, and devices, to save energy consumption of a terminal.

An embodiment of the present application provides a method for signal measurement, performed by a terminal, including:

receiving a signal transmitted from a network device, where the signal includes a first signal and/or a second signal; and
measuring the first signal, and/or measuring the second signal, to obtain a measurement result.

In an embodiment, the first signal includes a low power wake-up signal (LP-WUS) and/or a low power synchronizing signal (LP-SS); and/or
the second signal includes a channel state information reference signal (CSI-RS) and/or a synchronization signal/physical broadcast channel (PBCH) block (SSB).

In an embodiment, the measurement result includes at least one of:

a received power parameter of the signal;
a signal-to-noise and interference ratio parameter of the signal; or
a received quality parameter of the signal.

In an embodiment, the received power parameter of the signal satisfies:

$$P = \frac{P_1^r + P_2^r + \dots + P_M^r}{M},$$

where P is the received power parameter of the signal; M is a number of measurement units included in a measurement bandwidth for the signal, and M is a positive integer greater than or equal to 1; and $P_i^r$ is received power of the signal in an i-th measurement unit of the measurement bandwidth, and i ∈ [1, M].

In an embodiment, the signal-to-noise and interference ratio parameter of the signal satisfies:

$$S = \frac{S_1^r + S_2^r + \dots + S_M^r}{M},$$

where S is the signal-to-noise and interference ratio parameter of the signal; M is a number of measurement units included in a measurement bandwidth for the signal, and M is a positive integer greater than or equal to 1; and $S_i^r$ is a signal-to-noise and interference ratio of the signal in an i-th measurement unit of the measurement bandwidth, i ∈ [1,M], and

$$S_i^r = \frac{P_i^r}{Z_i^r + G_i^r},$$

where $P_i^r$ is received power of the signal in the i-th measurement unit; $Z_i^r$ is received power of a noise signal in the i-th measurement unit; and $G_i^r$ is received power of an interference signal in the i-th measurement unit.

In an embodiment, the measurement unit is any of:

a resource element (RE);
a resource block (RB); or
a measurement bandwidth.

In an embodiment, in case that the terminal includes an inverse fast Fourier transform (IFFT) module, the measurement unit is any of: a resource element (RE),

a resource block (RB), or a measurement bandwidth; or in case that the terminal does not includes an inverse fast Fourier transform (IFFT) module, the measurement unit is any of: a resource block (RB), or a measurement bandwidth.

In an embodiment, the received quality parameter of the signal satisfies:

$$Q = (N * P)/R,$$

where Q is the received quality parameter of the signal; N is a number of resource blocks (RBs) included in a measurement bandwidth for the signal, and N is a positive integer greater than or equal to 1; P is the received power parameter of the signal; and R is a received signal strength indicator of the signal.

In an embodiment, the received signal strength indicator satisfies:

$$R = \frac{P_1^o + P_2^o + ... + P_K^o}{K},$$

where R is the received signal strength indicator of the signal; K is a number of orthogonal frequency division multiplexing (OFDM) symbols included in a measurement window for the signal, and K is an integer greater than or equal to 1; and $P_j^o$ is total received power of the signal, an interference signal, and a noise signal on a j-th OFDM symbol in the measurement window.

In an embodiment, the terminal includes a low power wake-up receiver (LP-WUR) and a main radio (MR), and measuring the first signal, and/or measuring the second signal, to obtain the measurement result includes:

in case that the MR is in a sleep state, measuring, by the LP-WUR, the first signal and/or the second signal to obtain the measurement result, and/or in case that the MR is in a wake-up state, measuring, by the MR, the second signal to obtain the measurement result; or
in case that the MR is in a sleep state, measuring, by the MR, the second signal based on a first trigger signal to obtain the measurement result.

In an embodiment, in case that the MR is in the sleep state, measuring, by the LP-WUR, the first signal and/or the second signal to obtain the measurement result, and/or in case that the MR is in the wake-up state, measuring, by the MR, the second signal to obtain the measurement result includes:

in case that the MR is in the sleep state, measuring, by the LP-WUR, the first signal to obtain a first measurement quantity, and/or measuring, by the LP-WUR, the second signal to obtain a second measurement quantity; and/or

in case that the first measurement quantity is less than or equal to a first threshold, or the second measurement quantity is less than or equal to a second threshold, and the MR is in the wake-up state, measuring, by the MR, the second signal to obtain a third measurement quantity,
where the measurement result includes at least one of the first measurement quantity, the second measurement quantity, or the third measurement quantity.

In an embodiment, in case that the MR is in the sleep state, measuring, by the LP-WUR, the first signal to obtain the first measurement quantity, and/or measuring, by the LP-WUR, the second signal to obtain the second measurement quantity includes:

in case that the LP-WUR is in the wake-up state, measuring, by the LP-WUR, the first signal in a first time window to obtain the first measurement quantity; and/or
in case that the LP-WUR is in the wake-up state, measuring, by the LP-WUR, the second signal in a second time window to obtain the second measurement quantity.

In an embodiment, the method further includes: smoothing the first measurement quantity and the third measurement quantity to obtain a first smoothed result; and smoothing the second measurement quantity and the third measurement quantity to obtain a second smoothed result.

In an embodiment, in case that the MR is in the sleep state, measuring, by the MR, the second signal based on the first trigger signal to obtain the measurement result includes:

in case that the MR is in the sleep state, transmitting, by the LP-WUR, the first trigger signal to the MR after receiving the LP-WUS; and measuring, by the MR, in a third time window, the second signal based on the first trigger signal to obtain a fourth measurement quantity,
where the measurement result includes the fourth measurement quantity.

In an embodiment, the terminal includes a first terminal and a second terminal, and measuring the first signal, and/or measuring the second signal, to obtain the measurement result includes:

in case that the second terminal is in a sleep state, measuring, by the first terminal, the first signal and/or the second signal to obtain the measurement result, and/or in case that the second terminal is in a wake-up state, measuring, by the second terminal, the second signal to obtain the measurement result; or
in case that the second terminal is in a sleep state, measuring, by the second terminal, the second signal based on a second trigger signal to obtain the measurement result.

In an embodiment, in case that the second terminal is in the sleep state, measuring, by the first terminal, the first signal and/or the second signal to obtain the measurement result, and/or in case that the second terminal is in the wake-up state, measuring, by the second terminal, the second signal to obtain the measurement result includes:

in case that the second terminal is in the sleep state, measuring, by the first terminal, the first signal to obtain a fifth measurement quantity, and/or measuring, by the first terminal, the second signal to obtain a sixth measurement quantity; and/or
in case that the fifth measurement quantity is less than or equal to a third threshold, or the sixth measurement quantity is less than or equal to a fourth threshold, and the second terminal is in the wake-up state, measuring, by the second terminal, the second signal to obtain a seventh measurement quantity, where the measurement result includes at least one of the fifth measurement quantity, the sixth measurement quantity, or the seventh measurement quantity.

In an embodiment, in case that the second terminal is in the sleep state, measuring, by the first terminal, the first signal to obtain the fifth measurement quantity, and/or measuring, by the first terminal, the second signal to obtain the sixth measurement quantity includes:

in case that the first terminal is in the wake-up state, measuring, by the first terminal, the first signal in a fourth time window to obtain the fifth measurement quantity; and/or
in case that the first terminal is in the wake-up state, measuring, by the first terminal, the second signal in a fifth time window to obtain the sixth measurement quantity.

In an embodiment, in case that the second terminal is in the sleep state, measuring, by the second terminal, the second signal based on the second trigger signal to obtain the measurement result includes:

in case that the second terminal is in the sleep state, transmitting, by the first terminal, the second trigger signal to the second terminal after receiving the LP-WUS; and measuring, by the second terminal, in a sixth time window, the second signal based on the second trigger signal to obtain an eighth measurement quantity, where the measurement result includes the eighth measurement quantity.

In an embodiment, the method further includes: smoothing the fifth measurement quantity and the seventh measurement quantity to obtain a third smoothed result; and smoothing the sixth measurement quantity and the seventh measurement quantity to obtain a fourth smoothed result.

In an embodiment, the method further includes:

receiving configuration information transmitted from the network device, where the configuration information includes at least one of a time window parameter, a state parameter, or a measurement configuration parameter, where
the time window parameter includes at least one of a first time window parameter, a second time window parameter, a third time window parameter, a fourth time window parameter, a fifth time window parameter, or a sixth time window parameter, where
the first time window parameter is used to indicate a first time window, and the first time window parameter includes at least one of: a period of the first time window, a start time of the first time window, or an end time of the first time window;
the second time window parameter is used to indicate a second time window, and the second time window parameter includes at least one of: a period of the second time window, a start time of the second time window, or an end time of the second time window;
the third time window parameter is used to indicate a third time window, and the third time window parameter includes at least one of: a period of the third time window, a start time of the third time window, or an end time of the third time window;
the fourth time window parameter is used to indicate a fourth time window, and the fourth time window parameter includes at least one of: a period of the fourth time window, a start time of the fourth time window, or an end time of the fourth time window;
the fifth time window parameter is used to indicate a fifth time window, and the fifth time window parameter includes at least one of: a period of the fifth time window, a start time of the fifth time window, or an end time of the fifth time window; and
the sixth time window parameter is used to indicate a sixth time window, and the sixth time window parameter includes at least one of: a period of the sixth time window, a start time of the sixth time window, or an end time of the sixth time window;
the state parameter includes at least one of a first state parameter, a second state parameter, or a third state parameter, where
the first state parameter is used to indicate that the MR is in the sleep state or a second terminal is in the sleep state, and the first state parameter includes at least one of a period of a first state, a first duration, or a start time of a first state;
the second state parameter is used to indicate that the MR is in the wake-up state or the second terminal is in the wake-up state, and the second state parameter includes at least one of a period of a second state, a second duration, or a start time of a second state; and

the third state parameter is used to indicate that the LP-WUR is in the wake-up state or a first terminal is in the wake-up state, and the third state parameter includes at least one of a period of a third state, a third duration, or a start time of a third state; and

the measurement configuration parameter includes at least one of a measurement object, measurement reporting, a measurement identifier, a measurement quantity configuration, measurement threshold enabling, a measurement interval, or a measurement gap allocation.

In an embodiment, the configuration information is carried by one or more of:

a broadcast signal;
a protocol predefined signaling;
a higher layer preconfigured signaling; or
downlink control information (DCI).

An embodiment of the present application provides a method for signal measurement, performed by a network device, including:

transmitting a signal to a terminal, where the signal includes a first signal and/or a second signal, where the first signal includes a low power wake-up signal (LP-WUS) and/or a low power synchronizing signal (LP-SS); and/or

the second signal includes a channel state information reference signal (CSI-RS) and/or a synchronization signal/physical broadcast channel (PBCH) block (SSB).

In an embodiment, the method further includes:

transmitting configuration information to the terminal, where the configuration information includes at least one of a time window parameter, a state parameter, or a measurement configuration parameter, where

the time window parameter includes at least one of a first time window parameter, a second time window parameter, a third time window parameter, a fourth time window parameter, a fifth time window parameter, or a sixth time window parameter, where

the first time window parameter is used to indicate a first time window, and the first time window parameter includes at least one of: a period of the first time window, a start time of the first time window, or an end time of the first time window;

the second time window parameter is used to indicate a second time window, and the second time window parameter includes at least one of: a period of the second time window, a start time of the second time window, or an end time of the second time window;

the third time window parameter is used to indicate a third time window, and the third time window parameter includes at least one of: a period of the third time window, a start time of the third time window, or an end time of the third time window;

the fourth time window parameter is used to indicate a fourth time window, and the fourth time window parameter includes at least one of: a period of the fourth time window, a start time of the fourth time window, or an end time of the fourth time window;

the fifth time window parameter is used to indicate a fifth time window, and the fifth time window parameter includes at least one of: a period of the fifth time window, a start time of the fifth time window, or an end time of the fifth time window; and

the sixth time window parameter is used to indicate a sixth time window, and the sixth time window parameter includes at least one of: a period of the sixth time window, a start time of the sixth time window, or an end time of the sixth time window;

the state parameter includes at least one of a first state parameter, a second state parameter, or a third state parameter, where

the first state parameter is used to indicate that a master radio (MR) is in a sleep state or a second terminal is in a sleep state, and the first state parameter includes at least one of a period of a first state, a first duration, or a start time of a first state;

the second state parameter is used to indicate that the MR is in a wake-up state or the second terminal is in a wake-up state, and the second state parameter includes at least one of a period of a second state, a second duration, or a start time of a second state; and

the third state parameter is used to indicate that a low power wake-up receiver (LP-WUR) is in the wake-up state or a first terminal is in the wake-up state, and the third state parameter includes at least one of a period of a third state, a third duration, or a start time of a third state; and

the measurement configuration parameter includes at least one of a measurement object, measurement reporting, a measurement identifier, a measurement quantity configuration, measurement threshold enabling, a measurement interval, or a measurement gap allocation.

In an embodiment, the configuration information is carried by one or more of:

a broadcast signal;
a protocol predefined signaling;
a higher layer preconfigured signaling; or
downlink control information (DCI).

An embodiment of the present application provides a terminal, including a memory, a transceiver and a processor,

where the memory is used for storing a computer program, the transceiver is used for receiving and transmitting data under control of the processor, and the processor is used for reading the computer program in the memory and performing following operations:

> receiving a signal transmitted from a network device, where the signal includes a first signal and/or a second signal; and
> measuring the first signal, and/or measuring the second signal, to obtain a measurement result.

In an embodiment, the first signal includes a low power wake-up signal (LP-WUS) and/or a low power synchronizing signal (LP-SS); and/or
the second signal includes a channel state information reference signal (CSI-RS) and/or a synchronization signal/physical broadcast channel (PBCH) block (SSB).

In an embodiment, the measurement result includes at least one of:

> a received power parameter of the signal;
> a signal-to-noise and interference ratio parameter of the signal; or
> a received quality parameter of the signal.

In an embodiment, the received power parameter of the signal satisfies:

$$P = \frac{P_1^r + P_2^r + \ldots + P_M^r}{M},$$

where P is the received power parameter of the signal; M is a number of measurement units included in a measurement bandwidth for the signal, and M is a positive integer greater than or equal to 1; and $P_i^r$ is received power of the signal in an i-th measurement unit of the measurement bandwidth, and $i \in [1, M]$.

In an embodiment, the signal-to-noise and interference ratio parameter of the signal satisfies:

$$S = \frac{S_1^r + S_2^r + \ldots + S_M^r}{M},$$

where S is the signal-to-noise and interference ratio parameter of the signal; M is a number of measurement units included in a measurement bandwidth for the signal, and M is a positive integer greater than or equal to 1; and $S_i^r$ is a signal-to-noise and interference ratio of the signal in an i-th measurement unit of the measurement bandwidth, $i \in [1,M]$, and

$$S_i^r = \frac{P_i^r}{Z_i^r + G_i^r},$$

where $P_i^r$ is received power of the signal in the i-th measurement unit; $Z_i^r$ is received power of a noise signal in the i-th measurement unit; and $G_i^r$ is received power of an interference signal in the i-th measurement unit.

In an embodiment, the measurement unit is any of:

> a resource element (RE);
> a resource block (RB); or
> a measurement bandwidth.

In an embodiment, in case that the terminal includes an inverse fast Fourier transform (IFFT) module, the measurement unit is any of: a resource element (RE), a resource block (RB), or a measurement bandwidth; or in case that the terminal does not includes an inverse fast Fourier transform (IFFT) module, the measurement unit is any of: a resource block (RB), or a measurement bandwidth.

In an embodiment, the received quality parameter of the signal satisfies:

$$Q = (N * P)/R,$$

where Q is the received quality parameter of the signal; N is a number of resource blocks (RBs) included in a measurement bandwidth for the signal, and N is a positive integer greater than or equal to 1; P is the received power parameter of the signal; and R is a received signal strength indicator of the signal.

In an embodiment, the received signal strength indicator satisfies:

$$R = \frac{P_1^o + P_2^o + \ldots + P_K^o}{K},$$

where R is the received signal strength indicator of the signal; K is a number of orthogonal frequency division multiplexing (OFDM) symbols included in a measurement window for the signal, and K is an integer greater than or equal to 1; and $P_j^o$ is total received power of the signal, an interference signal, and a noise signal on a j-th OFDM symbol in the measurement window.

In an embodiment, the terminal includes a low power wake-up receiver (LP-WUR) and a main radio (MR), and measuring the first signal, and/or measuring the second signal, to obtain the measurement result includes:

> in case that the MR is in a sleep state, measuring, by the LP-WUR, the first signal and/or the second signal to obtain the measurement result, and/or in case that the MR is in a wake-up state, measuring, by the MR, the second signal to obtain the measurement result; or

in case that the MR is in a sleep state, measuring, by the MR, the second signal based on a first trigger signal to obtain the measurement result.

In an embodiment, in case that the MR is in the sleep state, measuring, by the LP-WUR, the first signal and/or the second signal to obtain the measurement result, and/or in case that the MR is in the wake-up state, measuring, by the MR, the second signal to obtain the measurement result includes:

in case that the MR is in the sleep state, measuring, by the LP-WUR, the first signal to obtain a first measurement quantity, and/or measuring, by the LP-WUR, the second signal to obtain a second measurement quantity; and/or
in case that the first measurement quantity is less than or equal to a first threshold, or the second measurement quantity is less than or equal to a second threshold, and the MR is in the wake-up state, measuring, by the MR, the second signal to obtain a third measurement quantity,
where the measurement result includes at least one of the first measurement quantity, the second measurement quantity, or the third measurement quantity.

In an embodiment, in case that the MR is in the sleep state, measuring, by the LP-WUR, the first signal to obtain the first measurement quantity, and/or measuring, by the LP-WUR, the second signal to obtain the second measurement quantity includes:

in case that the LP-WUR is in the wake-up state, measuring, by the LP-WUR, the first signal in a first time window to obtain the first measurement quantity; and/or
in case that the LP-WUR is in the wake-up state, measuring, by the LP-WUR, the second signal in a second time window to obtain the second measurement quantity.

In an embodiment, the processor is further used for reading the computer program in the memory and performing following operations:
smoothing the first measurement quantity and the third measurement quantity to obtain a first smoothed result; and smoothing the second measurement quantity and the third measurement quantity to obtain a second smoothed result.

In an embodiment, in case that the MR is in the sleep state, measuring, by the MR, the second signal based on the first trigger signal to obtain the measurement result includes:

in case that the MR is in the sleep state, transmitting, by the LP-WUR, the first trigger signal to the MR after receiving the LP-WUS; and measuring, by the MR, in a third time window, the second signal based on the first trigger signal to obtain a fourth measurement quantity,
where the measurement result includes the fourth measurement quantity.

In an embodiment, the terminal includes a first terminal and a second terminal, and measuring the first signal, and/or measuring the second signal, to obtain the measurement result includes:

in case that the second terminal is in a sleep state, measuring, by the first terminal, the first signal and/or the second signal to obtain the measurement result, and/or in case that the second terminal is in a wake-up state, measuring, by the second terminal, the second signal to obtain the measurement result; or
in case that the second terminal is in a sleep state, measuring, by the second terminal, the second signal based on a second trigger signal to obtain the measurement result.

In an embodiment, in case that the second terminal is in the sleep state, measuring, by the first terminal, the first signal and/or the second signal to obtain the measurement result, and/or in case that the second terminal is in the wake-up state, measuring, by the second terminal, the second signal to obtain the measurement result includes:

in case that the second terminal is in the sleep state, measuring, by the first terminal, the first signal to obtain a fifth measurement quantity, and/or measuring, by the first terminal, the second signal to obtain a sixth measurement quantity; and/or
in case that the fifth measurement quantity is less than or equal to a third threshold, or the sixth measurement quantity is less than or equal to a fourth threshold, and the second terminal is in the wake-up state, measuring, by the second terminal, the second signal to obtain a seventh measurement quantity,
where the measurement result includes at least one of the fifth measurement quantity, the sixth measurement quantity, or the seventh measurement quantity.

In an embodiment, in case that the second terminal is in the sleep state, measuring, by the first terminal, the first signal to obtain the fifth measurement quantity, and/or measuring, by the first terminal, the second signal to obtain the sixth measurement quantity includes:

in case that the first terminal is in the wake-up state, measuring, by the first terminal, the first signal in a fourth time window to obtain the fifth measurement quantity; and/or
in case that the first terminal is in the wake-up state, measuring, by the first terminal, the second signal in a fifth time window to obtain the sixth measurement quantity.

In an embodiment, in case that the second terminal is in the sleep state, measuring, by the second terminal, the second signal based on the second trigger signal to obtain the measurement result includes:

in case that the second terminal is in the sleep state, transmitting, by the first terminal, the second trigger signal to second terminal after receiving the LP-WUS; and measuring, by the second terminal, in a sixth time window, the second signal based on the second trigger signal to obtain an eighth measurement quantity,

where the measurement result includes the eighth measurement quantity.

In an embodiment, the processor is further used for reading the computer program in the memory and performing following operations:
smoothing the fifth measurement quantity and the seventh measurement quantity to obtain a third smoothed result; and smoothing the sixth measurement quantity and the seventh measurement quantity to obtain a fourth smoothed result.

In an embodiment, the processor is further used for reading the computer program in the memory and performing following operations:

receiving configuration information transmitted from the network device, where the configuration information includes at least one of a time window parameter, a state parameter, or a measurement configuration parameter, where

the time window parameter includes at least one of a first time window parameter, a second time window parameter, a third time window parameter, a fourth time window parameter, a fifth time window parameter, or a sixth time window parameter, where

the first time window parameter is used to indicate a first time window, and the first time window parameter includes at least one of: a period of the first time window, a start time of the first time window, or an end time of the first time window;

the second time window parameter is used to indicate a second time window, and the second time window parameter includes at least one of: a period of the second time window, a start time of the second time window, or an end time of the second time window;

the third time window parameter is used to indicate a third time window, and the third time window parameter includes at least one of: a period of the third time window, a start time of the third time window, or an end time of the third time window;

the fourth time window parameter is used to indicate a fourth time window, and the fourth time window parameter includes at least one of: a period of the fourth time window, a start time of the fourth time window, or an end time of the fourth time window;

the fifth time window parameter is used to indicate a fifth time window, and the fifth time window parameter includes at least one of: a period of the fifth time window, a start time of the fifth time window, or an end time of the fifth time window; and

the sixth time window parameter is used to indicate a sixth time window, and the sixth time window parameter includes at least one of: a period of the sixth time window, a start time of the sixth time window, or an end time of the sixth time window;

the state parameter includes at least one of a first state parameter, a second state parameter, or a third state parameter, where

the first state parameter is used to indicate that the MR is in the sleep state or a second terminal is in the sleep state, and the first state parameter includes at least one of a period of a first state, a first duration, or a start time of a first state;

the second state parameter is used to indicate that the MR is in the wake-up state or the second terminal is in the wake-up state, and the second state parameter includes at least one of a period of a second state, a second duration, or a start time of a second state; and

the third state parameter is used to indicate that the LP-WUR is in the wake-up state or a first terminal is in the wake-up state, and the third state parameter includes at least one of a period of a third state, a third duration, or a start time of a third state; and

the measurement configuration parameter includes at least one of a measurement object, measurement reporting, a measurement identifier, a measurement quantity configuration, measurement threshold enabling, a measurement interval, or a measurement gap allocation.

In an embodiment, the configuration information is carried by one or more of:

a broadcast signal;
a protocol predefined signaling;
a higher layer preconfigured signaling; or
downlink control information (DCI).

An embodiment of the present application provides a network device, including a memory, a transceiver and a processor,
where the memory is used for storing a computer program, the transceiver is used for receiving and transmitting data under control of the processor, and the processor is used for reading the computer program in the memory and performing following operations:

transmitting a signal to a terminal, where the signal includes a first signal and/or a second signal, where

the first signal includes a low power wake-up signal (LP-WUS) and/or a low power synchronizing signal (LP-SS); and/or
the second signal includes a channel state information reference signal (CSI-RS) and/or a synchronization signal/physical broadcast channel (PBCH) block (SSB).

In an embodiment, the processor is further used for reading the computer program in the memory and performing following operations:

transmitting configuration information to the terminal, where the configuration information includes at least one of a time window parameter, a state parameter, or a measurement configuration parameter, where
the time window parameter includes at least one of a first time window parameter, a second time window parameter, a third time window parameter, a fourth time window parameter, a fifth time window parameter, or a sixth time window parameter, where
the first time window parameter is used to indicate a first time window, and the first time window parameter includes at least one of: a period of the first time window, a start time of the first time window, or an end time of the first time window;
the second time window parameter is used to indicate a second time window, and the second time window parameter includes at least one of: a period of the second time window, a start time of the second time window, or an end time of the second time window;
the third time window parameter is used to indicate a third time window, and the third time window parameter includes at least one of: a period of the third time window, a start time of the third time window, or an end time of the third time window;
the fourth time window parameter is used to indicate a fourth time window, and the fourth time window parameter includes at least one of: a period of the fourth time window, a start time of the fourth time window, or an end time of the fourth time window;
the fifth time window parameter is used to indicate a fifth time window, and the fifth time window parameter includes at least one of: a period of the fifth time window, a start time of the fifth time window, or an end time of the fifth time window; and
the sixth time window parameter is used to indicate a sixth time window, and the sixth time window parameter includes at least one of: a period of the sixth time window, a start time of the sixth time window, or an end time of the sixth time window;
the state parameter includes at least one of a first state parameter, a second state parameter, or a third state parameter, where
the first state parameter is used to indicate that a master radio (MR) is in a sleep state or a second terminal is in a sleep state, and the first state parameter includes at least one of a period of a first state, a first duration, or a start time of a first state;
the second state parameter is used to indicate that the MR is in a wake-up state or the second terminal is in a wake-up state, and the second state parameter includes at least one of a period of a second state, a second duration, or a start time of a second state; and
the third state parameter is used to indicate that a low power wake-up receiver (LP-WUR) is in the wake-up state or a first terminal is in the wake-up state, and the third state parameter includes at least one of a period of a third state, a third duration, or a start time of a third state; and
the measurement configuration parameter includes at least one of a measurement object, measurement reporting, a measurement identifier, a measurement quantity configuration, measurement threshold enabling, a measurement interval, or a measurement gap allocation.

In an embodiment, the configuration information is carried by one or more of:

a broadcast signal;
a protocol predefined signaling;
a higher layer preconfigured signaling; or
downlink control information (DCI).

An embodiment of the present application provides an apparatus for signal measurement, including:

a receiving module, used for receiving a signal transmitted from a network device, where the signal includes a first signal and/or a second signal; and
a measuring module, used for measuring the first signal, and/or measuring the second signal, to obtain a measurement result.

In an embodiment, the first signal includes a low power wake-up signal (LP-WUS) and/or a low power synchronizing signal (LP-SS); and/or
the second signal includes a channel state information reference signal (CSI-RS) and/or a synchronization signal/physical broadcast channel (PBCH) block (SSB).
In an embodiment, the measurement result includes at least one of:

a received power parameter of the signal;
a signal-to-noise and interference ratio parameter of the signal; or
a received quality parameter of the signal.

In an embodiment, the received power parameter of the signal satisfies:

$$P = \frac{P_1^r + P_2^r + \dots + P_M^r}{M},$$

where P is the received power parameter of the signal; M is a number of measurement units included in a measurement bandwidth for the signal, and M is a positive integer greater than or equal to 1; and $P_i^r$ is received power of the signal in an i-th measurement unit of the measurement bandwidth, and i ∈ [1, M].

In an embodiment, the signal-to-noise and interference ratio parameter of the signal satisfies:

$$S = \frac{S_1^r + S_2^r + \dots + S_M^r}{M},$$

where S is the signal-to-noise and interference ratio parameter of the signal; M is a number of measurement units included in a measurement bandwidth for the signal, and M is a positive integer greater than or equal to 1; and $S_i^r$ is a signal-to-noise and interference ratio of the signal in an i-th measurement unit of the measurement bandwidth, i ∈ [1,M], and

$$S_i^r = \frac{P_i^r}{Z_i^r + G_i^r},$$

where $P_i^r$ is received power of the signal in the i-th measurement unit; $Z_i^r$ is received power of a noise signal in the i-th measurement unit; and $G_i^r$ is received power of an interference signal in the i-th measurement unit.

In an embodiment, the measurement unit is any of:

a resource element (RE);
a resource block (RB); or
a measurement bandwidth.

In an embodiment, in case that a terminal includes an inverse fast Fourier transform (IFFT) module, the measurement unit is any of: a resource element (RE), a resource block (RB), or a measurement bandwidth; or in case that a terminal does not includes an inverse fast Fourier transform (IFFT) module, the measurement unit is any of: a resource block (RB), or a measurement bandwidth.

In an embodiment, the received quality parameter of the signal satisfies:

$$Q = (N * P)/R,$$

where Q is the received quality parameter of the signal; N is a number of resource blocks (RBs) included in a measurement bandwidth for the signal, and N is a positive integer greater than or equal to 1; P is the received power parameter of the signal; and R is a received signal strength indicator of the signal.

In an embodiment, the received signal strength indicator satisfies:

$$R = \frac{P_1^o + P_2^o + \dots + P_K^o}{K},$$

where R is the received signal strength indicator of the signal; K is a number of orthogonal frequency division multiplexing (OFDM) symbols included in a measurement window for the signal, and K is an integer greater than or equal to 1; and $P_j^o$ is total received power of the signal, an interference signal, and a noise signal on a j-th OFDM symbol in the measurement window.

In an embodiment, a terminal includes a low power wake-up receiver (LP-WUR) and a main radio (MR), and the measuring module is used for:

in case that the MR is in a sleep state, measuring, by the LP-WUR, the first signal and/or the second signal to obtain the measurement result, and/or in case that the MR is in a wake-up state, measuring, by the MR, the second signal to obtain the measurement result; or
in case that the MR is in a sleep state, measuring, by the MR, the second signal based on a first trigger signal to obtain the measurement result.

In an embodiment, the measuring module is used for:

in case that the MR is in the sleep state, measuring, by the LP-WUR, the first signal to obtain a first measurement quantity, and/or measuring, by the LP-WUR, the second signal to obtain a second measurement quantity; and/or
in case that the first measurement quantity is less than or equal to a first threshold, or the second measurement quantity is less than or equal to a second threshold, and the MR is in the wake-up state, measuring, by the MR, the second signal to obtain a third measurement quantity,
where the measurement result includes at least one of the first measurement quantity, the second measurement quantity, or the third measurement quantity.

In an embodiment, the measuring module is used for:

in case that the LP-WUR is in the wake-up state, measuring, by the LP-WUR, the first signal in a first time window to obtain the first measurement quantity; and/or
in case that the LP-WUR is in the wake-up state, measuring, by the LP-WUR, the second signal in a second time window to obtain the second measurement quantity.

In an embodiment, the measuring module is further used for

smoothing the first measurement quantity and the third measurement quantity to obtain a first smoothed result; and smoothing the second measurement quantity and the third measurement quantity to obtain a second smoothed result.

In an embodiment, the measuring module is used for:

in case that the MR is in the sleep state, transmitting, by the LP-WUR, the first trigger signal to the MR after receiving the LP-WUS; and measuring, by the MR, in a third time window, the second signal based on the first trigger signal to obtain a fourth measurement quantity,

where the measurement result includes the fourth measurement quantity.

In an embodiment, a terminal includes a first terminal and a second terminal, and the measuring module is used for:

in case that the second terminal is in a sleep state, measuring, by the first terminal, the first signal and/or the second signal to obtain the measurement result, and/or in case that the second terminal is in a wake-up state, measuring, by the second terminal, the second signal to obtain the measurement result; or in case that the second terminal is in a sleep state, measuring, by the second terminal, the second signal based on a second trigger signal to obtain the measurement result.

In an embodiment, the measuring module is used for:

in case that the second terminal is in the sleep state, measuring, by the first terminal, the first signal to obtain a fifth measurement quantity, and/or measuring, by the first terminal, the second signal to obtain a sixth measurement quantity; and/or in case that the fifth measurement quantity is less than or equal to a third threshold, or the sixth measurement quantity is less than or equal to a fourth threshold, and the second terminal is in the wake-up state, measuring, by the second terminal, the second signal to obtain a seventh measurement quantity, where the measurement result includes at least one of the fifth measurement quantity, the sixth measurement quantity, or the seventh measurement quantity.

In an embodiment, the measuring module is used for:

in case that the first terminal is in the wake-up state, measuring, by the first terminal, the first signal in a fourth time window to obtain the fifth measurement quantity; and/or
in case that the first terminal is in the wake-up state, measuring, by the first terminal, the second signal in a fifth time window to obtain the sixth measurement quantity.

In an embodiment, the measuring module is used for:

in case that the second terminal is in the sleep state, transmitting, by the first terminal, the second trigger signal to the second terminal after receiving the LP-WUS; and measuring, by the second terminal, in a sixth time window, the second signal based on the second trigger signal to obtain an eighth measurement quantity,

where the measurement result includes the eighth measurement quantity.

In an embodiment, the measuring module is further used for:

smoothing the fifth measurement quantity and the seventh measurement quantity to obtain a third smoothed result; and smoothing the sixth measurement quantity and the seventh measurement quantity to obtain a fourth smoothed result.

In an embodiment, the receiving module is further used for:

receiving configuration information transmitted from the network device, where the configuration information includes at least one of a time window parameter, a state parameter, or a measurement configuration parameter, where

the time window parameter includes at least one of a first time window parameter, a second time window parameter, a third time window parameter, a fourth time window parameter, a fifth time window parameter, or a sixth time window parameter, where

the first time window parameter is used to indicate a first time window, and the first time window parameter includes at least one of: a period of the first time window, a start time of the first time window, or an end time of the first time window;

the second time window parameter is used to indicate a second time window, and the second time window parameter includes at least one of: a period of the second time window, a start time of the second time window, or an end time of the second time window;

the third time window parameter is used to indicate a third time window, and the third time window parameter includes at least one of: a period of the third time window, a start time of the third time window, or an end time of the third time window;

the fourth time window parameter is used to indicate a fourth time window, and the fourth time window parameter includes at least one of: a period of the fourth time window, a start time of the fourth time window, or an end time of the fourth time window;

the fifth time window parameter is used to indicate a fifth time window, and the fifth time window parameter includes at least one of: a period of the fifth time window, a start time of the fifth time window, or an end time of the fifth time window; and

the sixth time window parameter is used to indicate a sixth time window, and the sixth time window parameter includes at least one of: a period of the sixth time window, a start time of the sixth time window, or an end time of the sixth time window;

the state parameter includes at least one of a first state parameter, a second state parameter, or a third state parameter, where

the first state parameter is used to indicate that the MR is in the sleep state or a second terminal is in the sleep state, and the first state parameter includes at least one of a period of a first state, a first duration, or a start time of a first state;

the second state parameter is used to indicate that the MR is in the wake-up state or the second terminal is in the wake-up state, and the second state parameter includes at least one of a period of a second state, a second duration, or a start time of a second state; and

the third state parameter is used to indicate that the LP-WUR is in the wake-up state or a first terminal is in the wake-up state, and the third state parameter includes at least one of a period of a third state, a third duration, or a start time of a third state; and

the measurement configuration parameter includes at least one of a measurement object, measurement reporting, a measurement identifier, a measurement quantity configuration, measurement threshold enabling, a measurement interval, or a measurement gap allocation.

In an embodiment, the configuration information is carried by one or more of:

a broadcast signal;
a protocol predefined signaling;
a higher layer preconfigured signaling; or
downlink control information (DCI).

An embodiment of the present application provides an apparatus for signal measurement, including:

a transmitting module, used for transmitting a signal to a terminal, where the signal includes a first signal and/or a second signal, where

the first signal includes a low power wake-up signal (LP-WUS) and/or a low power synchronizing signal (LP-SS); and/or

the second signal includes a channel state information reference signal (CSI-RS) and/or a synchronization signal/physical broadcast channel (PBCH) block (SSB).

In an embodiment, the transmitting module is further used for:

transmitting configuration information to the terminal, where the configuration information includes at least one of a time window parameter, a state parameter, or a measurement configuration parameter, where

the time window parameter includes at least one of a first time window parameter, a second time window parameter, a third time window parameter, a fourth time window parameter, a fifth time window parameter, or a sixth time window parameter, where

the first time window parameter is used to indicate a first time window, and the first time window parameter includes at least one of: a period of the first time window, a start time of the first time window, or an end time of the first time window;

the second time window parameter is used to indicate a second time window, and the second time window parameter includes at least one of: a period of the second time window, a start time of the second time window, or an end time of the second time window;

the third time window parameter is used to indicate a third time window, and the third time window parameter includes at least one of: a period of the third time window, a start time of the third time window, or an end time of the third time window;

the fourth time window parameter is used to indicate a fourth time window, and the fourth time window parameter includes at least one of: a period of the fourth time window, a start time of the fourth time window, or an end time of the fourth time window;

the fifth time window parameter is used to indicate a fifth time window, and the fifth time window parameter includes at least one of: a period of the fifth time window, a start time of the fifth time window, or an end time of the fifth time window; and

the sixth time window parameter is used to indicate a sixth time window, and the sixth time window parameter includes at least one of: a period of the sixth time window, a start time of the sixth time window, or an end time of the sixth time window;

the state parameter includes at least one of a first state parameter, a second state parameter, or a third state parameter, where

the first state parameter is used to indicate that a master radio (MR) is in a sleep state or a second terminal is in a sleep state, and the first state parameter includes at least one of a period of a first state, a first duration, or a start time of a first state;

the second state parameter is used to indicate that the MR is in a wake-up state or the second terminal is in a wake-up state, and the second state parameter includes at least one of a period of a second state, a second duration, or a start time of a second state; and

the third state parameter is used to indicate that a low power wake-up receiver (LP-WUR) is in the wake-up state or a first terminal is in the wake-up state, and the third state parameter includes at least one of a period of a third state, a third duration, or a start time of a third state; and

the measurement configuration parameter includes at least one of a measurement object, measurement reporting, a measurement identifier, a measurement quantity configuration, measurement threshold enabling, a measurement interval, or a measurement gap allocation.

In an embodiment, the configuration information is carried by one or more of:

a broadcast signal;
a protocol predefined signaling;
a higher layer preconfigured signaling; or
downlink control information (DCI).

An embodiment of the present application provides a computer-readable storage medium storing a computer program, where the computer program is used for causing a computer to perform any of the methods described above.

In the methods and apparatuses for signal measurement, and devices provided by the embodiments of the present application, the terminal first receives the signal transmitted from the network device, where the signal includes the first signal and/or the second signal, and then measures the first signal, and/or measures the second signal, to obtain the measurement result. In response to a problem that a traditional radio resource management (RRM) measurement solution obtains a limited RRM measurement quantity during each measurement procedure, the solution of the embodiments of the present application may measure the first signal and/or the second signal during the measurement procedure. Compared with the traditional solution that can only measure the second signal, the solution provided by the embodiments of the present application may increase the RRM measurement quantity obtained during the measurement procedure, which reduces a number of times the terminal is woken up, and further reduces energy consumption of the terminal.

BRIEF DESCRIPTION OF THE DRAWINGS

In order to illustrate the solutions disclosed in the embodiments of the present application more clearly, the drawings used in the description of the embodiments are briefly described below. The drawings in the following description are only some embodiments of the present application, and other drawings may be obtained according to these drawings without any creative work for those skilled in the art.

FIG. 1 is a schematic diagram of an application scenario of a low power wake-up signal (LP-WUS) according to an embodiment of the present application;
FIG. 2 is a schematic flowchart of a method for signal measurement according to an embodiment of the present application;
FIG. 3 is a schematic diagram of an application scenario according to an embodiment of the present application;
FIG. 4 is a first schematic diagram of a signal measurement according to an embodiment of the present application;
FIG. 5 is a second schematic diagram of a signal measurement according to an embodiment of the present application;
FIG. 6 is a third schematic diagram of a signal measurement according to an embodiment of the present application;
FIG. 7 is a schematic structural diagram of a terminal according to an embodiment of the present application;
FIG. 8 is a schematic structural diagram of a network device according to an embodiment of the present application;
FIG. 9 is a first schematic structural diagram of an apparatus for signal measurement according to an embodiment of the present application; and
FIG. 10 is a second schematic structural diagram of an apparatus for signal measurement according to an embodiment of the present application.

DETAILED DESCRIPTION

To make the objectives, solutions and advantages of the present application clearer, the solutions in the embodiments of the present application are clearly and completely described in the following with reference to the accompanying drawings in the embodiments of the present application. These embodiments are only a part of the embodiments of the present application, and not all of the embodiments. All other embodiments obtained by a person of ordinary skill in the art based on the embodiments of the present application without any creative work belong to the scope of the present application.

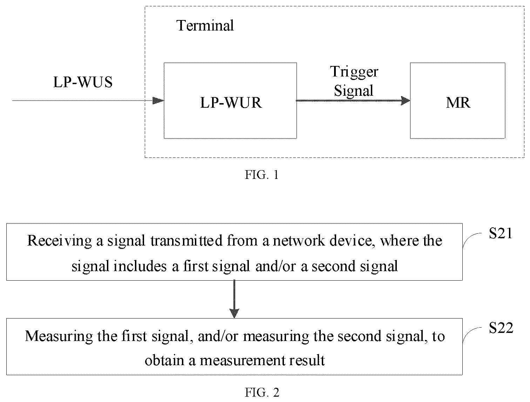

To reduce energy consumption of a terminal, a low power wake-up signal (LP-WUS) and a low power wake-up receiver (LP-WUR) are proposed. In an application scenario of the LP-WUS, energy consumption of the terminal may be reduced through the LP-WUS. This procedure, for example, may be described in conjunction with FIG. 1.

FIG. 1 is a schematic diagram of an application scenario of a low power wake-up signal (LP-WUS) according to an embodiment of the present application. As shown in FIG. 1, a terminal includes an LP-WUR and a main radio (MR). In case that there is data transmission, the terminal receives the LP-WUS through the LP-WUR, and activates the MR to wake up from an ultra-deep sleep state to receive data; in case that there is no data transmission, the MR is turned off, which may greatly save power for the terminal.

In the application scenario of the LP-WUS, a terminal such as a wearable device moves in different cells, and a channel condition around the terminal changes all the time. The terminal needs to select a suitable cell, which involves terminal mobility management.

The mobility management refers to management of location information, security, and service continuity for the terminal. During a procedure that the terminal moves in the different cells, the channel condition around the terminal changes, the terminal needs to select a suitable cell for handover, and the terminal mobility management is required. For a terminal in an idle state, the mobility management includes two procedures of cell selection and cell reselection; and for a terminal in an inactive state, the mobility management only involves a cell reselection procedure.

Cell selection is a procedure in which a terminal measures a reference signal of a mobility management to find and identify a suitable cell or an acceptable cell and camps in the cell. In a procedure of cell selection, a terminal needs to measure a cell to be selected, and in case that a signal quality of the cell to be selected meets an S criterion, the cell to be selected may be selected as a camped cell.

Cell reselection is a procedure in which a terminal camping in a certain cell continues to monitor and measure a reference signal of a mobility management of a current camped cell and other cells, and decides whether to continue in the current camped cell or reselect the camped cell based on a signal strength of the current camped cell and other cells.

A network device may achieve an objective of controlling camping of the terminal by configuring priorities for different frequencies. The terminal selects a cell, at a certain frequency, with best signal quality to provide a better service. The cell reselection may be divided into intra-frequency neighboring cell reselection and inter-frequency neighboring cell reselection, which correspond to different procedures respectively.

In the mobility management for the terminal, to support a mobility of the terminal and timely obtain channel conditions of cells currently around the terminal, the network device configures the terminal to perform a radio resource management (RRM). During an RRM measurement procedure, the terminal measures a reference signal of the mobility management to obtain an RRM measurement quantity.

In the idle state or the inactive state, the reference signal of the mobility management for the terminal is a secondary synchronization signal (SSS) included in a synchronization signal/ physical broadcast channel (PBCH) block (SSB). In addition, since transmitting energy per resource element (EPRE) of a physical broadcast channel (PBCH) demodulation reference signal (DM-RS) is the same as EPRE of the SSS, the terminal may also use the PBCH DM-RS as an auxiliary mobility management reference signal to improve measurement performance of the RRM.

In the connected state, in addition to the SSB, the reference signal for the terminal also includes a channel state information reference signal (CSI-RS). The network device may use, based on requirements, the SSB and/or the CSI-RS, or the CSI-RS, or the SSB and/or the CSI-RS and the CSI-RS jointly, to support the mobility management.

The terminal reports measurement results to a serving cell only in the connected state. In the idle state or the inactive state, the terminal does not need to report these measurement results, but needs to use these measurement results to make cell reselection decisions.

The following SSB-based RRM measurement quantities are introduced in the new radio (NR): synchronization signal-reference signal received power (SS-RSRP), synchronization signal-reference signal received quality (SS-RSRQ), and synchronization signal signal-to-noise and interference ratio (SS-SINR).

In the NR, each cell transmits an SSB burst set in a configured period and mode. To notify the terminal of a specific time to search and measure the SSB, the network device may configure an SSB based RRM measurement timing configuration (SMTC) for the terminal. The SMTC configuration includes a measurement window period (for example, it may be set to {5, 10, 20, 40, 80, 160} ms, etc.), a time offset within the measurement window period, and a measurement window duration (for example, it may be set to {1, 2, ..., 5} ms, etc.), etc.

Traditionally, the terminal is woken up once in each discontinuous transmission (DRX) cycle to perform the RRM measurement. However, a traditional RRM measurement solution obtains a limited RRM measurement quantity during each measurement procedure, which increases a number of RRM measurements after the terminal is woken up, resulting in higher energy consumption of the terminal. An embodiment of the present application provides a method for signal measurement, which reduces the energy consumption of the terminal by increasing the RRM measurement quantities obtained during the measurement procedure. The solutions of the embodiments of the present application are introduced in the following in conjunction with the accompanying drawings.

FIG. 2 is a schematic flowchart of a method for signal measurement according to an embodiment of the present application. The method is performed by a terminal. As shown in FIG. 2, the method includes the following steps.

S21: receiving a signal transmitted from a network device, where the signal includes a first signal and/or a second signal.

The network device may periodically or non-periodically transmit the first signal and/or the second signal to the terminal. The terminal includes a first device and a second device, the first signal may be a received signal of the first device, and the second signal may be a second signal of the second device.

S22: measuring the first signal, and/or measuring the second signal, to obtain a measurement result.

After receiving the first signal and/or the second signal transmitted from the network device, the terminal may measure the first signal and/or measure the second signal to obtain the measurement result. For the first device, the first device may measure the first signal, or may measure the second signal, to obtain the measurement result of the first device. For the second device, the second device may measure the second signal, to obtain the measurement result of the second device. The measurement result of the terminal by measuring the first signal and/or the second signal may include the measurement result of the first device, and may also include the measurement result of the second device.

In the method for signal measurement performed by the terminal provided by the embodiments of the present application, the terminal first receives the signal transmitted from the network device, where the signal includes the first signal and/or the second signal, and then measures the first signal, and/or measures the second signal, to obtain the measurement result. In response to a problem that a traditional radio resource management (RRM) measurement solution obtains a limited RRM measurement quantity during each measurement procedure, the solution of the embodiments of the present application may measure the first signal and/or the second signal during the measurement procedure. Compared with the traditional solution that can only measure the second signal, the solution provided by the embodiments of the present application may increase the RRM measurement quantity obtained during the measurement procedure, which reduces a number of times the terminal is woken up, and further reduces energy consumption of the terminal.

The solutions of the embodiments of the present application are described in detail below with reference to the accompanying drawings.

For the signal transmitted from the network device, after the terminal measures the signal, the obtained measurement result may include at least one of a received power parameter of the signal, a signal-to-noise and interference ratio parameter of the signal, or a received quality parameter of the signal. The received power parameter is used to indicate measured received power of the signal, the signal-to-noise and interference ratio parameter is used to indicate a measured signal-to-noise and interference ratio of the signal, and the received quality parameter is used to indicate measured received quality of the signal.

First, an implementation of how to measure the signal and obtain the received power parameter of the signal is introduced.

In a possible implementation, the terminal may measure received power of the signal in each measurement unit, and obtain the received power parameter of the signal based on the received power of the signal in each measurement unit, where the received power parameter of the signal is a linear average of the received power of the signal in each measurement unit.

It is assumed that a number of measurement units included in a measurement bandwidth of the signal is M, where M is a positive integer greater than or equal to 1. For any i-th measurement unit among the M measurement units, $i \in [1, M]$, received power of the signal at the i-th measurement unit is $P_i^r$, and the received power parameter of the signal may be obtained based on the following formula (1):

$$P = \frac{P_1^r + P_2^r + \ldots + P_M^r}{M}, \qquad (1)$$

where P is the received power parameter of the signal, and $P_1^r, P_2^r, \ldots, P_M^r$ are received power of the signal at a first measurement unit, received power of the signal at a second measurement unit,..., received power of the signal at an M-th measurement unit, respectively.

An implementation of how to measure the signal and obtain the signal-to-noise and interference ratio parameter of the signal is introduced in the following.

In a possible implementation, the terminal may measure the received power of the signal in each measurement unit, received power of an interference signal in each measurement unit, and received power of a noise signal in each measurement unit.

In an embodiment, the interference signal may be an interference signal from a same channel of each cell, and/or an interference signal from an adjacent channel. In an embodiment, the each cell is a neighboring cell of the cell where the terminal is located. The noise signal may include, for example, a thermal noise signal, etc.

For any measurement unit of the measurement bandwidth, the signal-to-noise and interference ratio of the signal on the measurement unit may be determined based on the received power of the noise signal on the measurement unit and the received power of the interference signal on the measurement unit.

It is assumed that the number of measurement units included in the measurement bandwidth of the signal is M, and M is a positive integer greater than or equal to 1. For any i-th measurement unit among the M measurement units, $i \in [1, M]$, received power of the signal at an i-th measurement unit is $P_i^r$, received power of the noise signal at the i-th measurement unit is $Z_i^r$, and received power of the interference signal at the i-th measurement unit is $G_i^r$. For any i-th measurement unit, the signal-to-noise and interference ratio of the signal at the i-th measurement unit may be obtained based on the following formula (2):

$$S_i^r = \frac{P_i^r}{Z_i^r + G_i^r},\qquad(2)$$

where $S_i^r$ is the signal-to-noise and interference ratio of the signal at the i-th measurement unit of the measurement bandwidth; $P_i^r$ is the received power of the signal at the i-th measurement unit; $Z_i^r$ is the received power of the noise signal at the i-th measurement unit; and $G_i^r$ is the received power of the interference signal at the i-th measurement unit.

Based on the above formula (2), the signal-to-noise and interference ratio of the signal at each measurement unit may be obtained. Then, the signal-to-noise and interference ratio parameter of the signal is obtained based on the signal-to-noise and interference ratio of the signal at each measurement unit, where the signal-to-noise and interference ratio parameter of the signal is a linear average of the signal-to-noise and interference ratio of the signal at each measurement unit. A specific procedure may be referred to the following formula (3):

$$S = \frac{S_1^r + S_2^r + \ldots + S_M^r}{M},\qquad(3)$$

where S is the signal-to-noise and interference ratio parameter of the signal; M is a number of measurement units included in the measurement bandwidth of the signal, and M is a positive integer greater than or equal to 1; and $S_i^r$ is the signal-to-noise and interference ratio of the signal at the i-th measurement unit of the measurement bandwidth, $i \in [1, M]$.

In the embodiments of the present application, a level of the measurement unit may be any one of a resource block (RB) level, a resource element (RE) level, or a measurement bandwidth level. The level of the measurement unit may also be referred to as a granularity of the measurement unit. In case that the level of the measurement unit is the RB level, each RB on the measurement bandwidth of the signal may be used as a measurement unit; in case that the level of the measurement unit is the RE level, each RE on the measurement bandwidth of the signal may be used as a measurement unit; in case that the level of the measurement unit is the measurement bandwidth level, since there is only one measurement bandwidth for the signal, the measurement bandwidth is used as a measurement unit.

In some embodiments, the terminal may determine the level of the measurement unit based on a characteristic of the terminal. For example, in case that the terminal includes an inverse fast Fourier transform (IFFT) module, the terminal may parse the RE, and the terminal may determine that the level of the measurement unit is the RE level. The terminal may also select the level of the measurement unit as the RB level or the measurement bandwidth level. In case that the terminal does not include an IFFT module, the terminal cannot parse the RE, and the terminal selects the level of the measurement unit as the RB level or the measurement bandwidth level.

In the above embodiments, the implementations of how to obtain the received power parameter of the signal and how to obtain the signal-to-noise and interference ratio parameter of the signal are introduced. The following describes an implementation of how to obtain the received quality parameter of the signal.

In a possible implementation, the network device may configure a piece of measurement time information, and the measurement time information is used to indicate a measurement window in which the terminal performs measurement. In an embodiment, the measurement time information includes a start time, a duration and an interval duration, where the duration indicates a duration of each measurement window, and the interval duration indicates an interval duration between any two adjacent measurement windows. Therefore, the measurement window in which the terminal performs measurement may be determined based on the start time, the duration and the interval duration.

The network device configures the measurement time information and transmits the measurement time information to the terminal, and the terminal may determine the measurement window based on the measurement time information. The measurement window refers to a time domain range in which the terminal measures the signal, a frequency domain range in which the terminal measures the signal is still the measurement bandwidth of the signal, and the measurement bandwidth of the signal is the same as the measurement bandwidth for calculating the received power parameter in the above embodiments.

Then, the terminal measures total received power of the signal, the interference signal and the noise signal on each orthogonal frequency division multiplexing (OFDM) symbol in the measurement window. A received signal strength indicator of the signal may be obtained based on the total received power on each OFDM symbol in the measurement window. In the embodiments of the present application, the interference signal may be an interference signal from a same channel of each cell, and/or an interference signal from an adjacent channel. In an embodiment, the each cell is a neighboring cell of the cell where the terminal is located. The noise signal may include, for example, a thermal noise signal, etc.

The received signal strength indicator of the signal is a linear average of the total received power on each OFDM symbol in the measurement window, and a specific calculation may be referred to the following formula (4):

$$R = \frac{P_1^0 + P_2^0 + \dots + P_K^0}{K}, \qquad (4)$$

where R is the received signal strength indicator of the signal; K is a number of OFDM symbols included in the measurement window of the signal, and K is an integer greater than or equal to 1; and $P_j^0$ is total received power of the signal, the interference signal and the noise signal on a j-th OFDM symbol in the measurement window.

After obtaining the received signal strength indicator of the signal, the received quality parameter of the signal may be obtained based on a number of RBs included in the measurement bandwidth of the signal and the received power parameter of the signal. A specific procedure may be referred in the following formula (5):

$$Q = (N * P)/R, \qquad (5)$$

where Q is the received quality parameter of the signal; N is a number of RBs included in the measurement bandwidth of the signal, and N is a positive integer greater than or equal to 1; P is the received power parameter of the signal, and the specific solution procedure of P may be referred to the above formula (1); and R is the received signal strength indicator of the signal.

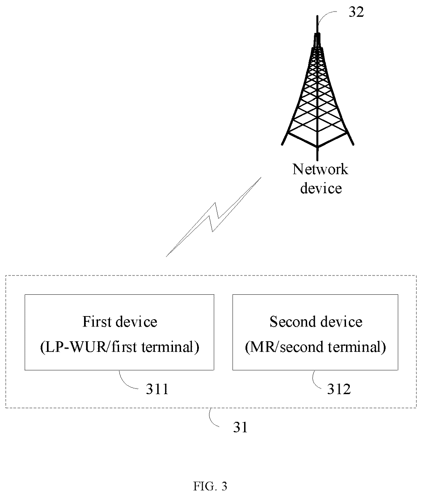

FIG. 3 is a schematic diagram of an application scenario according to an embodiment of the present application. As shown in FIG. 3, a terminal 31 and a network device 32 are included, where the terminal 31 includes a first device 311 and a second device 312.

In an embodiment, the first device 311 is an LP-WUR, and the second device 312 is an MR. In an embodiment, the first device 311 is a first terminal, and the second device 312 is a second terminal.

The network device 32 may transmit the first signal and/or the second signal to the terminal 31. In an embodiment, the first signal is a received signal of the first device 311, for example, the first signal may include an LP-WUS and/or a low power synchronizing signal (LP-SS). In an embodiment, the second signal is a received signal of the second device 312, for example, the second signal may include a CSI-RS and/or an SSB.

The terminal 31 may be configured with four states, namely, the first device being in a sleep state, the first device being in a wake-up state, the second device being in a sleep state, and the second device being in a wake-up state.

The network device may define configuration information for indicating various states of the terminal. The configuration information includes a state parameter, and the state parameter includes at least one of a first state parameter, a second state parameter, or a third state parameter. The first state parameter is used to indicate a first state, the second state parameter is used to indicate a second state, and the third state parameter is used to indicate a third state.

The first state parameter is used to indicate that the MR is in the sleep state or the second terminal is in the sleep state. In case that the terminal includes an LP-WUR and an MR, the first state parameter is used to indicate that the MR is in the sleep state; in case that the terminal includes a first terminal and a second terminal, the first state parameter is used to indicate that the second terminal is in the sleep state.

In an implementation, the first state parameter includes at least one of a period of the first state, a first duration, or a start time of the first state. Based on at least one of the period of the first state, the first duration, or the start time of the first state, it may be determined when the MR/second terminal is in the sleep state.

For example, the network device and the terminal may pre-agree on the start time of the first state and the first duration. In case that the first state parameter includes the period of the first state, the terminal may determine a duration when the MR/second terminal is in the sleep state based on a pre-agreed start time of the first state and a pre-agreed first duration, and may determine, combined with the period of the first state, subsequent durations when the MR/second terminal is in the sleep state.

For example, the network device and the terminal may pre-agree on the first duration. In case that the first state parameter includes the start time of the first state, the terminal may determine a duration when the MR/second terminal is in the sleep state based on a pre-agreed first duration and the start time of the first state.

For example, in case that the first state parameter includes the start time of the first state and the first duration, the terminal may determine the duration when the MR/second terminal is in the sleep state based on the start time of the first state and the first duration.

The second state parameter is used to indicate that the MR is in the wake-up state or the second terminal is in the wake-up state. In case that the terminal includes the LP-WUR and the MR, the second state parameter is used to indicate that the MR is in the wake-up state; in case that the terminal includes the first terminal and the second terminal, the second state parameter is used to indicate that the second terminal is in the wake-up state.

In an implementation, the second state parameter includes at least one of a period of the second state, a second duration, or a start time of the second state. Based on at least one of the period of the second state, the second duration, or the start time of the second state, it may be determined when the MR/second terminal is in the wake-up state. The implementation of determining when the MR/second terminal is in the wake-up state based on the second state parameter is similar to the implementation of determining when the MR/second terminal is in the sleep state based on the first state parameter, which is not repeated here.

The third state parameter is used to indicate that the LP-WUR is in the wake-up state or the first terminal is in the wake-up state. In case that the terminal includes the LP-WUR and the MR, the third state parameter is used to indicate that the LP-WUR is in the wake-up state; in case that the terminal includes the first terminal and the second terminal, the third state parameter is used to indicate that the first terminal is in the wake-up state.

In an implementation, the third state parameter includes at least one of a period of the third state, a third duration, or a start time of the third state. Based on at least one of the period of the third state, the third duration, or the start time of the third state, it may be determined when the LP-WUR/first terminal is in the wake-up state. The implementation of determining when the LP-WUR/first terminal is in the wake-up state based on the third state parameter is similar to the implementation of determining when the MR/second terminal is in the sleep state based on the first state parameter, which is not repeated here.

The network device may define configuration information for indicating a time window for the terminal to perform an RRM measurement. The configuration information includes a time window parameter, and the time window parameter includes at least one of a first time window parameter, a second time window parameter, a third time window parameter, a fourth time window parameter, a fifth time window parameter, or a sixth time window parameter. The first time window parameter is used to indicate a first time window, the second time window parameter is used to indicate a second time window, the third time window parameter is used to indicate a third time window, the fourth time window parameter is used to indicate a fourth time window, the fifth time window parameter is used to indicate a fifth time window, and the sixth time window parameter is used to indicate a sixth time window.

In an implementation, the first time window parameter includes at least one of a period of the first time window, a start time of the first time window, or an end time of the first time window. Based on at least one of the period of the first time window, the start time of the first time window, or the end time of the first time window, the first time window may be determined.

For example, the network device and the terminal may pre-agree on the start time of the first time window and a duration of the first time window. In case that the first time window parameter includes the period of the first time window, the terminal may determine the first time window based on a pre-agreed start time of the first time window and a pre-agreed duration of the first time window, and may determine, in combination with the period of the first time window, a next first time window, a next of the next first time window, etc.

For example, the network device and the terminal may pre-agree on a duration of the first time window. In case that the first time window parameter includes the start time of the first time window, the terminal may determine the first time window based on a pre-agreed duration of the first time window and the start time of the first time window.

For example, the network device and the terminal may pre-agree on a duration of the first time window. In case that the first time window parameter includes the end time of the first time window, the terminal may determine the first time window based on a pre-agreed duration of the first time window and the end time of the first time window.

For example, in case that the first time window parameter includes the start time of the first time window and the end time of the first time window, the terminal may determine the first time window based on the start time of the first time window and the end time of the first time window.

In an implementation, the second time window parameter includes at least one of a period of the second time window, a start time of the second time window, or an end time of the second time window. Based on at least one of the period of the second time window, the start time of the second time window, or the end time of the second time window, the second time window may be determined.

For example, the network device and the terminal may pre-agree on a duration of the second time window. In case that the second time window parameter includes the start time of the second time window, the terminal may determine the second time window based on a pre-agreed duration of the second time window and the start time of the second time window.

For example, the network device and the terminal may pre-agree on a duration of the second time window. In case that the second time window parameter includes the end time of the second time window, the terminal may determine the second time window based on a pre-agreed duration of the second time window and the end time of the second time window.

For example, in case that the second time window parameter includes the start time of the second time window and the end time of the second time window, the terminal may determine the second time window based on the start time of the second time window and the end time of the second time window.

In an implementation, the third time window parameter includes at least one of a period of the third time window, a start time of the third time window, or an end time of the third time window. Based on at least one of the period of the third time window, the start time of the third time window, or the end time of the third time window, the third time window may be determined.

For example, the network device and the terminal may pre-agree on a duration of the third time window. In case that the third time window parameter includes the start time of the third time window, the terminal may determine the third time window based on a pre-agreed duration of the third time window and the start time of the third time window.

For example, the network device and the terminal may pre-agree on a duration of the third time window. In case that the third time window parameter includes the end time of the third time window, the terminal may determine the third time window based on a pre-agreed duration of the third time window and the end time of the third time window.

For example, in case that the third time window parameter includes the start time of the third time window and the end time of the third time window, the terminal may determine the third time window based on the start time of the third time window and the end time of the third time window.

In an implementation, the fourth time window parameter includes at least one of a period of the fourth time window, a start time of the fourth time window, or an end time of the fourth time window. Based on at least one of the period of the fourth time window, the start time of the fourth time window, or the end time of the fourth time window, the fourth time window may be determined. The implementation of determining the fourth time window based on the fourth time window parameter is similar to the implementation of determining the first time window based on the first time window parameter, determining the second time window based on the second time window parameter, and determining the third time window based on the third time window parameter in the above embodiments, which are not repeated here.

In an implementation, the fifth time window parameter includes at least one of a period of the fifth time window, a start time of the fifth time window, or an end time of the fifth time window. Based on at least one of the period of the fifth time window, the start time of the fifth time window, or the end time of the fifth time window, the fifth time window may be determined. The implementation of determining the fifth time window based on the fifth time window parameter is similar to the implementation of determining the first time window based on the first time window parameter, determining the second time window based on the second time window parameter, and determining the third time window based on the third time window parameter in the above embodiments, which are not repeated here.

In an implementation, the sixth time window parameter includes at least one of a period of the sixth time window, a start time of the sixth time window, or an end time of the sixth time window. Based on at least one of the period of the sixth time window, the start time of the sixth time window, or the end time of the sixth time window, the sixth time window may be determined. The implementation of determining the sixth time window based on the sixth time window parameter is similar to the implementation of determining the first time window based on the first time window parameter, determining the second time window based on the second time window parameter, and determining the third time window based on the third time window parameter in the above embodiments, which are not repeated here.

The network device may define configuration information for indicating the terminal to perform an RRM measurement. The configuration information includes a measurement configuration parameter, and the measurement configuration parameter include at least one of a measurement object, measurement reporting, a measurement identifier, a measurement quantity configuration, measurement threshold enabling, a measurement interval, or a measurement gap allocation. The terminal may measure the first signal based on the measurement configuration parameter, or may measure the second signal based on the measurement configuration parameter.

The measurement object indicates which signal is measured, the measurement reporting indicates whether it is needed to report the measurement result to the network device after the measurement, the measurement identifier is used to indicate different measurement operations, the measurement quantity configuration is used to indicate a measurement quantity needs to be measured, the measurement threshold enabling indicates whether it is needed to enable the measurement threshold, the measurement interval is used to indicate a time interval between two adjacent measurement operations, and the measurement gap allocation may be used to indicate an allocation of a measurement gap between two measurements.

It should be noted that the time window parameter, the state parameter, and the measurement configuration parameter may be configured in same configuration information, or in different configuration information. For any piece of configuration information, the configuration information may be carried by one or more of a broadcast signal, a protocol predefined signaling, a higher layer preconfigured signaling, or downlink control information (DCI), where the broadcast signal may include, for example, a system information block (SIB), a PBCH, etc. The network device transmits the configuration information to the terminal. After receiving the configuration information, the terminal performs a measurement based on the configuration information.

In the above embodiments, a procedure by which the network device may configure, through the configuration information, the terminal to measure related parameters is introduced. A procedure by which the terminal performs a measurement is introduced below in conjunction with specific examples.

After the network device transmits the first signal and/or the second signal to the terminal, the terminal measures the first signal, and/or, measures the second signal, to obtains the measurement result. The terminal includes the LP-WUR and the MR, or the terminal includes the first terminal and the second terminal. The following introduces implementations of the terminal performing measurements for these two different cases.

For a case where the terminal includes the LP-WUR and the MR, in case that the MR is in the sleep state, the LP-WUR measures the first signal and/or the second signal to obtain the measurement result, and/or, in case that the MR is in the wake-up state, the MR measures the second signal to obtain the measurement result; or, in case that the MR is in the sleep state, the MR measures the second signal based on a first trigger signal to obtain the measurement result.

In case that the MR is in the sleep state, the LP-WUR measures the first signal and/or the second signal to obtain the measurement result, and/or, in case that the MR is in the wake-up state, the MR measures the second signal to obtain the measurement result, includes at least the following implementation ways.

Way 1.1: in case that the MR is in the sleep state, the LP-WUR measures the first signal to obtain a first measurement quantity, and/or, in case that the MR is in the wake-up state, the MR measures the second signal to obtain a third measurement quantity.

Way 1.2: in case that the MR is in the sleep state, the LP-WUR measures the second signal to obtain a second measurement quantity, and/or, in case that the MR is in the wake-up state, the MR measures the second signal to obtain a third measurement quantity.

Way 1.3: in case that the MR is in the sleep state, the LP-WUR measures the first signal to obtain a first measurement quantity, and/or, the LP-WUR measures the second signal to obtain a second measurement quantity; and/or, in case that the MR is in the wake-up state, the MR measures the second signal to obtain a third measurement quantity.

The first measurement quantity obtained by the LP-WUR measuring the first signal may include at least one of a received power parameter of the first signal, a signal-to-noise and interference ratio parameter of the first signal, or a received quality parameter of the first signal. A specific implementation procedure may be referred to the introduction of the above embodiments, which are not repeated here. It should be noted that in a procedure of determining the received power parameter of the first signal or the signal-to-noise and interference ratio parameter of the first signal, a level of a measurement unit in a measurement bandwidth may be determined based on whether the LP-WUR includes an IFFT module. If the LP-WUR includes an IFFT module, the measurement unit is any of an RE, an RB, or the measurement bandwidth of the first signal; if the LP-WUR does not include an IFFT module, the measurement unit is an RB or the measurement bandwidth of the first signal.

The second measurement quantity obtained by the LP-WUR measuring the second signal may include at least one of a received power parameter of the second signal, a signal-to-noise and interference ratio parameter of the second signal, or a received quality parameter of the second signal. A specific implementation procedure may be referred to the introduction of the above embodiments, which are not repeated here. It should be noted that in a procedure of determining the received power parameter of the second signal or the signal-to-noise and interference ratio parameter of the second signal, the level of the measurement unit in the measurement bandwidth may be determined based on whether the LP-WUR includes an IFFT module. If the LP-WUR includes an IFFT module, the measurement unit is any of an RE, an RB, or the measurement bandwidth of the second signal; if the LP-WUR does not include an IFFT module, the measurement unit is an RB or the measurement bandwidth of the second signal.

The third measurement quantity obtained by the MR measuring the second signal may include at least one of a received power parameter of the second signal, a signal-to-noise and interference ratio parameter of the second signal, or a received quality parameter of the second signal. A specific implementation procedure may be referred to the introduction of the above embodiments, which are not repeated here. It should be noted that in a procedure of determining the received power parameter of the second signal or the signal-to-noise and interference ratio parameter of the second signal, the level of the measurement unit in the measurement bandwidth may be determined based on whether the MR includes an IFFT module. If the MR includes an IFFT module, the measurement unit is any of an RE, an RB, or the measurement bandwidth of the second signal; if the MR does not include an IFFT module, the measurement unit is an RB or the measurement bandwidth of the second signal.

The above-mentioned implementation ways are introduced below.

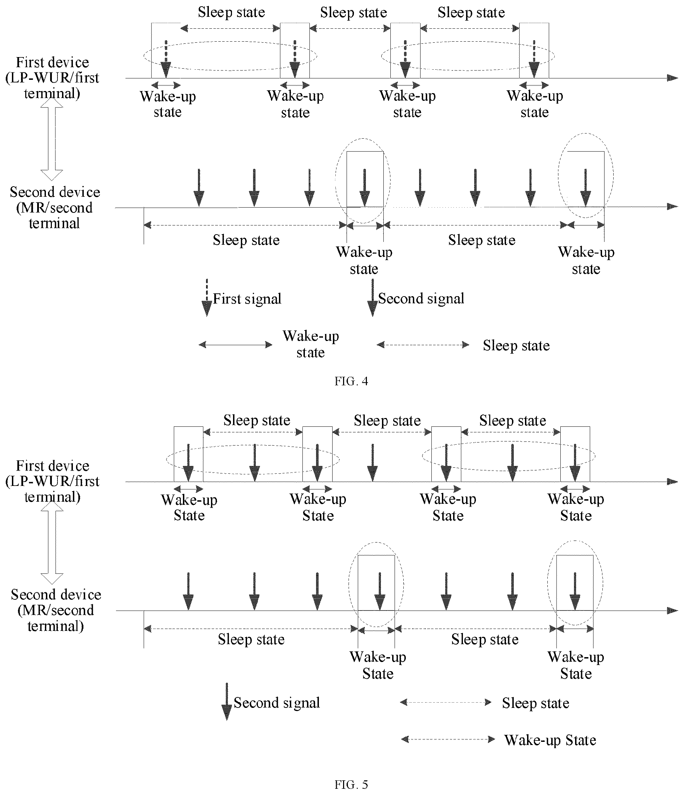

An implementation procedure of way 1.1 is introduced in conjunction with FIG. 4.

FIG. 4 is a first schematic diagram of a signal measurement according to an embodiment of the present application. As shown in FIG. 4, a terminal includes a first device and a second device, the first device may measure a first signal, and the second device may measure a second signal. The first signal may be a received signal of the first device, for example, the first signal may include an LP-WUS and/or an LP-SS. The second signal may be a received signal of the second device, for example, the second signal may include an SSB and/or a CSI-RS.

The network device periodically/non-periodically transmits the first signal to the terminal. In an embodiment, the periodicity or non-periodicity of the first signal may be defined by one or more of a broadcast signal, a predefined way, a higher layer preconfigured way, or DCI. The broadcast signal may include, for example, an SIB, or a PBCH.

The network device may also transmit configuration information to the terminal, the configuration information includes at least one of a time window parameter, a state parameter, or a measurement configuration parameter. The configuration information may be used to determine a time window, a measurement configuration, a state, etc. in subsequent measurement procedures of the terminal.

As shown in FIG. 4, for a case where the terminal includes an LP-WUR and an MR, in case that the MR is in the sleep state, the LP-WUR measures the first signal to obtain a first measurement quantity. The first measurement quantity may be at a cell level, may be from a serving cell of the terminal, may be from an intra-frequency cell of the terminal, or may be from an inter-frequency cell of the terminal.

The first signal may be a received signal of the LP-WUR, for example, the first signal may include an LP-WUS and/or an LP-SS. The first measurement quantity may include at least one of reference signal received power (RSRP) of the first signal, a reference signal received quality (RSRQ) of the first signal, or a signal-to-noise and interference ratio (SINR) of the first signal. The RSRP of the first signal may be, for example, low power RSRP (LP-RSRP), and the LP-RSRP represents a signal strength of the first signal. After receiving the first signal, the LP-WUR may filter the first signal, filter out a sideband to obtain a time domain waveform, perform sliding correlation on the time domain waveform, and obtain the strength of the first signal. The RSRQ of the first signal may be, for example, a low power RSRQ (LP-RSRQ), and the LP-RSRQ is a ratio of the LP-RSRP to an NR carrier received signal strength indicator (RSSI). The RSSI represents, for N resource blocks in a measurement bandwidth, total received power of all signals observed on orthogonal frequency division multiplexing (OFDM) symbols for measuring RSSI. The SINR of the first signal may be, for example, a low power SINR (LP-SINR), and the LP-SINR is a ratio of reference signal power to interference noise power within the measurement bandwidth.

In an embodiment, after the LP-WUR measures the first signal and obtains the first measurement quantity, the terminal determines whether the first measurement quantity is less than or equal to a first threshold. In case that the first measurement quantity is less than or equal to the first threshold, it means that the first measurement quantity cannot meet a service standard of the terminal. As a result, when the MR is in the wake-up state, the MR is triggered to measure the second signal to obtain a third measurement quantity. In case that the first measurement quantity is greater than the first threshold, it means that the first measurement quantity may meet the service standard of the terminal. As a result, the MR does not measure the second signal.

In case that the MR is in the wake-up state, the MR measures the second signal to obtain the third measurement quantity. The third measurement quantity may be at the cell level, may be from the serving cell of the terminal, may be from the intra-frequency cell of the terminal, or may be from the inter-frequency cell of the terminal.

The second signal may be a received signal of the MR, for example, the second signal may include an SSB and/or a CSI-RS. The third measurement quantity may include at least one of RSRP of the second signal, an RSRQ of the second signal, or an SINR of the second signal. The RSRP of the second signal may be, for example, an SS-RSRP, and the SS-RSRP is a linear average of power of the second signal measured on second signal resource units, indicating a signal strength of the second signal. The RSRQ of the second signal may be, for example, an SS-RSRQ, and the SS-RSRQ is a ratio of the SS-RSRP to an NR carrier RSSI. The RSSI represents, for N resource blocks in the measurement bandwidth, total received power of all signals observed on the OFDM symbols for measuring RSSI. The SINR of the second signal may be, for example, an SS-SINR, and the SS-SINR is a ratio of reference signal power to interference noise power within the measurement bandwidth.

After obtaining the first measurement quantity and the third measurement quantity, the terminal may smooth the first measurement quantity and the third measurement quantity to obtain a first smoothed result. The smoothing may be performed by the LP-WUR or by the MR. In an embodiment, the MR may transmit the third measurement quantity to the LP-WUR, and the LP-WUR may smooth the first measurement quantity and the third measurement quantity to obtain the first smoothed result. The LP-WUR may perform the smoothing at a physical layer or at a higher layer. The LP-WUR may also transmit the first measurement quantity to the MR, and the MR smooths the first measurement quantity and the third measurement quantity to obtain the first smoothed result. Since the first measurement quantity and the third measurement quantity are obtained by measurements from the LP-WUR and the MR respectively, the first measurement quantity and the third measurement quantity cannot be directly compared. After the smoothing, the first measurement quantity and the third measurement quantity may be compared to obtain the first smoothed result, and a next operation, such as a selection of a neighboring cell, may be determined based on the first smoothed result.

Since the LP-WUR measures the first signal when the MR is in the sleep state, obtains a corresponding first measurement quantity, and undertakes certain RRM measurement tasks, reducing a number of RRM measurements by the MR, after MR is woken up, a number of RRM measurements required to be performed is reduced, which reduces a number of times the MR is woken up, and reduces power consumption of the MR.

In the above embodiments, the implementation procedure of way 1.1 is introduced, and an implementation procedure of way 1.2 is introduced below in conjunction with FIG. 5.

FIG. 5 is a second schematic diagram of a signal measurement according to an embodiment of the present application. As shown in FIG. 5, the terminal includes a first device and a second device, the first device may measure a second signal, and the second device may measure a second signal. The second signal may be a received signal of the second device, for example, the second signal may include an SSB and/or a CSI-RS.

The network device may transmit configuration information to the terminal, the configuration information includes at least one of a time window parameter, a state parameter, or a measurement configuration parameter. The configuration information may be used to determine a time window, a measurement configuration, a state, etc. in subsequent measurement procedures of the terminal.

As shown in FIG. 5, for a case where the terminal includes an LP-WUR and an MR, in case that the MR is in the sleep state, the LP-WUR measures the second signal to obtain a second measurement quantity. The second measurement quantity may be at a cell level, may be from a serving cell of the terminal, may be from an intra-frequency cell of the terminal, or may be from an inter-frequency cell of the terminal.

The second signal may be a received signal of the LP-WUR, for example, the second signal may include an SSB and/or a CSI-RS. The second measurement quantity may include at least one of RSRP of the second signal, an RSRQ of the second signal, or an SS-SINR of the second signal. The RSRP of the second signal may be, for example, SS-RSRP, and the SS-RSRP is a linear average of power of the second signal measured on second signal resource units, indicating a signal strength of the second signal. After detecting the second signal, the LP-WUR may filter the second signal, filter out a sideband to obtain a time domain waveform, perform sliding correlation on the time domain waveform, and obtain the strength of the second signal. The RSRQ of the second signal may be, for example, an SS-RSRQ, and the SS-RSRQ is a ratio of the SS-RSRP to an NR carrier RSSI. The RSSI represents, for N resource blocks in the measurement bandwidth, total received power of all signals observed on the OFDM symbols for measuring RSSI. The SS-SINR of the second signal is a ratio of reference signal power to interference noise power within the measurement bandwidth.

In an embodiment, after the LP-WUR measures the second signal and obtains the second measurement quantity, the terminal determines whether the second measurement quantity is less than or equal to a second threshold. In case that the second measurement quantity is less than or equal to the second threshold, it means that the second measurement quantity cannot meet a service standard of the terminal. As a result, when the MR is in the wake-up state, the MR is triggered to measure the second signal to obtain a third measurement quantity. In case that the second measurement quantity is greater than the second threshold, it means that the first measurement quantity may meet the service standard of the terminal. As a result, the MR does not measure the second signal.

In case that the MR is in the wake-up state, the MR measures the second signal to obtain the third measurement quantity. The third measurement quantity may be at the cell level, may be from the serving cell of the terminal, may be from the intra-frequency cell of the terminal, or may be from the inter-frequency cell of the terminal.

The second signal may be a received signal of the MR, for example, the second signal may include an SSB and/or a CSI-RS. The third measurement quantity may include at least one of RSRP of the second signal, an RSRQ of the second signal, or an SINR of the second signal. The RSRP of the second signal may be, for example, an SS-RSRP, and the SS-RSRP is a linear average of power of the second signal measured on second signal resource units, indicating a signal strength of the second signal. The RSRQ of the second signal may be, for example, an SS-RSRQ, and the SS-RSRQ is a ratio of the SS-RSRP to an NR carrier RSSI. The RSSI represents, for N resource blocks in the measurement bandwidth, total received power of all signals observed on the OFDM symbols for measuring RSSI. The SINR of the second signal may be, for example, an SS-SINR, and the SS-SINR is a ratio of reference signal power to interference noise power within the measurement bandwidth.

After obtaining the second measurement quantity and the third measurement quantity, the terminal may smooth the second measurement quantity and the third measurement quantity to obtain a second smoothed result. The smoothing may be performed by the LP-WUR or by the MR. In an embodiment, the MR may transmit the third measurement quantity to the LP-WUR, and the LP-WUR may smooth the second measurement quantity and the third measurement quantity to obtain the second smoothed result. The LP-WUR may perform the smoothing at a physical layer or at a higher layer. The LP-WUR may also transmit the second measurement quantity to the MR, and the MR smooths the second measurement quantity and the third measurement quantity to obtain the second smoothed result. Since the second measurement quantity and the third measurement quantity are obtained by measurements from the LP-WUR and the MR respectively, the second measurement quantity and the third measurement quantity cannot be directly compared. After the smoothing, the second measurement quantity and the third measurement quantity may be compared to obtain the second smoothed result, and a next operation, such as a selection of a neighboring cell, may be determined based on the second smoothed result.

Since the LP-WUR measures the second signal when the MR is in the sleep state, obtains a corresponding second measurement quantity, undertakes certain RRM measurement tasks, and reduces a number of RRM measurements by the MR, after MR is woken up, a number of RRM measurements required to be performed is reduced, which reduces a number of times the MR is woken up, and reduces power consumption of the MR.

An implementation procedure of way 1.3 is introduced below.

The terminal includes an LP-WUR and an MR, the LP-WUR may measure a first signal or a second signal, and the MR may measure a second signal. The first signal may be a received signal of the LP-WUR, for example, the first signal may include an LP-WUS and/or an LP-SS. The second signal may be a received signal of the MR, for example, the second signal may include an SSB and/or a CSI-RS.

In case that the LP-WUR is in the wake-up state, the LP-WUR measures the first signal in a first time window to obtain a first measurement quantity; and/or in case that the LP-WUR is in the wake-up state, the LP-WUR measures the second signal in a second time window to obtain a second measurement quantity.

An implementation solution of the LP-WUR measuring the first signal in the first time window to obtain the first measurement quantity may be referred to the relevant introduction in way 1.1, and an implementation solution of the LP-WUR measuring the second signal in the second time window to obtain the second measurement quantity may be referred to the relevant introduction in way 1.2, which are not repeated here.

In case that the first measurement quantity is less than or equal to a first threshold, or the second measurement quantity is less than or equal to a second threshold, and the MR is in the wake-up state, the MR measures the second signal to obtain a third measurement quantity, of which an implementation procedure may be referred to the relevant introduction in way 1.1 and way 1.2, which are not repeated here.

In case that the MR is in the sleep state, after receiving the LP-WUS, the LP-WUR transmits a first trigger signal to the MR; and based on the first trigger signal, the MR measures, in a third time window, the second signal to obtain a fourth measurement quantity, where the measurement result includes the fourth measurement quantity.

The fourth measurement quantity obtained by the MR measuring the second signal may include at least one of a received power parameter of the second signal, a signal-to-noise and interference ratio parameter of the second signal, or a received quality parameter of the second signal. A specific implementation procedure may be referred to the introduction of the above embodiments, which are not repeated here. It should be noted that in a procedure of determining the received power parameter of the second signal or the signal-to-noise and interference ratio parameter of the second signal, the level of the measurement unit in the measurement bandwidth may be determined based on whether the MR includes an IFFT module. If the MR includes an IFFT module, the measurement unit is any of an RE, an RB, or the measurement bandwidth of the second signal; if the MR does not include an IFFT module, the measurement unit is an RB or the measurement bandwidth of the second signal. In an embodiment, a measurement window involved in a procedure of calculating the received quality parameter of the second signal is the third time window.

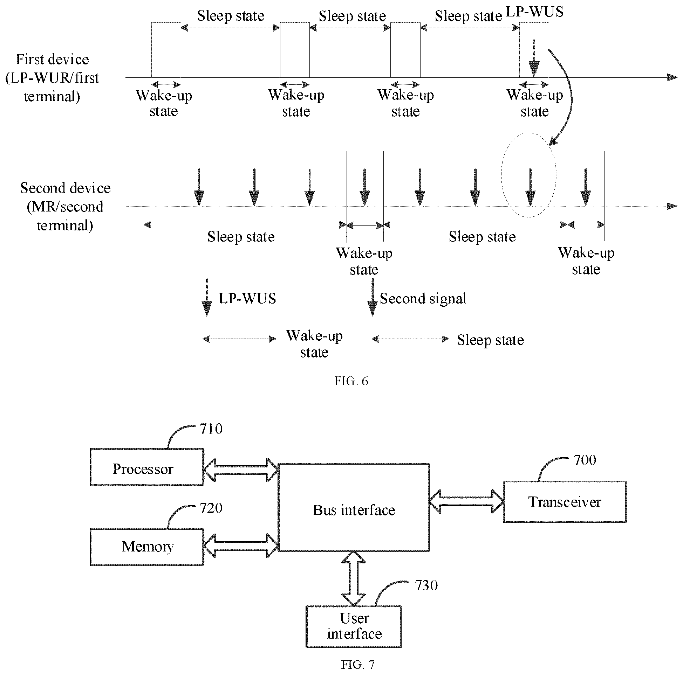

FIG. 6 is a third schematic diagram of a signal measurement according to an embodiment of the present application. As shown in FIG. 6, a terminal includes a first device and a second device, the first device may receive an LP-WUS to trigger the second device, and the second device may measure a second signal. The second signal may be a received signal of the second device, for example, the second signal may include an SSB and/or a CSI-RS.

A network device periodically/non-periodically transmits an LP-WUS to the terminal. In an embodiment, the periodicity or non-periodicity of the LP-WUS may be defined by one or more of a broadcast signal, a predefined way, a higher layer preconfigured way, or DCI. The broadcast signal may include, for example, an SIB, or a PBCH.

The network device may also transmit configuration information to the terminal, the configuration information includes at least one of a time window parameter, a state parameter, or a measurement configuration parameter. The configuration information may be used to determine a time window, a measurement configuration, a state, etc. in subsequent measurement procedures of the terminal.

The terminal includes an LP-WUR and an MR. The LP-WUR periodically or non-periodically receives an LP-WUS. After receiving the LP-WUS, the LP-WUR transmits a first trigger signal to the MR. Based on the first trigger signal, the MR measures, in a third time window, the second signal to obtain a fourth measurement quantity.

The first trigger signal may be a specific sequence or a voltage amplitude. The fourth measurement quantity may be at a cell level, and may be from a serving cell of the terminal, may be from an intra-frequency cell of the terminal, or may be from an inter-frequency cell of the terminal.

The second signal may be a received signal of the MR, for example, the second signal may include an SSB and/or a CSI-RS. The fourth measurement quantity may include at least one of RSRP of the second signal, an RSRQ of the second signal, or an SS-SINR of the second signal. The RSRP of the second signal may be, for example, an SS-RSRP, and the SS-RSRP is a linear average of power of the second signal measured on second signal resource units, indicating a signal strength of the second signal. The RSRQ of the second signal may be, for example, an SS-RSRQ, and the SS-RSRQ is a ratio of the SS-RSRP to an NR carrier RSSI. The RSSI represents, for N resource blocks in the measurement bandwidth, total received power of all signals observed on the OFDM symbols for measuring RSSI. The SS-SINR of the second signal is a ratio of reference signal power to interference noise power within the measurement bandwidth.

In the solution of the embodiments of the present application, the LP-WUR transmits the first trigger signal to trigger the MR to measure the second signal, and there is no need to perform a measurement every time the MR wakes up, which reduces a number of times the MR being woken up, and reduces power consumption of the MR.

For a case where the terminal includes a first terminal and a second terminal, in case that the second terminal is in the sleep state, the first terminal measures the first signal and/or the second signal to obtain a measurement result, and/or, in case that the second terminal is in the wake-up state, the second terminal measures the second signal to obtain a measurement result; or, in case that the second terminal is in the sleep state, the second terminal measures the second signal based on a second trigger signal to obtain a measurement result.

In case that the second terminal is in the sleep state, the first terminal measures the first signal and/or the second signal to obtain the measurement result, and/or, in case that the second terminal is in the wake-up state, the second terminal measures the second signal to obtain the measurement result, includes at least the following implementation ways.

Way 2.1: in case that the second terminal is in the sleep state, the first terminal measures the first signal to obtain a fifth measurement quantity, and/or, in case that the second terminal is in the wake-up state, the second terminal measures the second signal to obtain a seventh measurement quantity.

Way 2.2: in case that the second terminal is in the sleep state, the first terminal measures the second signal to obtain a sixth measurement quantity, and/or, in case that the second terminal is in the wake-up state, the second terminal measures the second signal to obtain a seventh measurement quantity.

Way 2.3: in case that the second terminal is in the sleep state, the first terminal measures the first signal to obtain a fifth measurement quantity, and/or, the first terminal measures the second signal to obtain a sixth measurement quantity; and/or, in case that the second terminal is in the wake-up state, the second terminal measures the second signal to obtain a seventh measurement quantity.

The fifth measurement quantity obtained by the first terminal measuring the first signal may include at least one of a received power parameter of the first signal, a signal-to-noise and interference ratio parameter of the first signal, or a received quality parameter of the first signal. A specific implementation procedure may be referred to the introduction of the above embodiments, which are not repeated here. It should be noted that in a procedure of determining the received power parameter of the first signal or the signal-to-noise and interference ratio parameter of the first signal, the level of the measurement unit in the measurement bandwidth may be determined based on whether the first terminal includes an IFFT module. If the first terminal includes an IFFT module, the measurement unit is any of an RE, an RB, or the measurement bandwidth of the first signal; if the first terminal does not include an IFFT module, the measurement unit is an RB or the measurement bandwidth of the first signal.

The sixth measurement quantity obtained by the first terminal measuring the second signal may include at least one of a received power parameter of the second signal, a signal-to-noise and interference ratio parameter of the second signal, or a received quality parameter of the second signal. A specific implementation procedure may be referred to the introduction of the above embodiments, which are not repeated here. It should be noted that in a procedure of determining the received power parameter of the second signal or the signal-to-noise and interference ratio parameter of the second signal, the level of the measurement unit in the measurement bandwidth may be determined based on whether the first terminal includes an IFFT module. If the first terminal includes an IFFT module, the measurement unit is any of an RE, an RB, or the measurement bandwidth of the second signal; if the first terminal does not include an IFFT module, the measurement unit is an RB or the measurement bandwidth of the second signal.

The seventh measurement quantity obtained by the second terminal measuring the second signal may include at least one of a received power parameter of the second signal, a signal-to-noise and interference ratio parameter of the second signal, or a received quality parameter of the second signal. A specific implementation procedure may be referred to the introduction of the above embodiments, which are not repeated here. It should be noted that in a procedure of determining the received power parameter of the second signal or the signal-to-noise and interference ratio parameter of the second signal, the level of the measurement unit in the measurement bandwidth may be determined based on whether the second terminal includes an IFFT module. If the second terminal includes an IFFT module, the measurement unit is any of an RE, an RB, or the measurement bandwidth of the second signal; if the second terminal does not include an IFFT module, the measurement unit is an RB or the measurement bandwidth of the second signal.

The above-mentioned implementation ways are introduced below.

An implementation procedure of way 2.1 is introduced in conjunction with FIG. 4.

FIG. 4 is a first schematic diagram of a signal measurement according to an embodiment of the present application. As shown in FIG. 4, a terminal includes a first device and a second device, the first device may measure a first signal, and the second device may measure a second signal. The first signal may be a received signal of the first device, for example, the first signal may include an LP-WUS and/or an LP-SS. The second signal may be a received signal of the second device, for example, the second signal may include an SSB and/or a CSI-RS.

The network device periodically/non-periodically transmits the first signal to the terminal. In an embodiment, the periodicity or non-periodicity of the first signal may be defined by one or more of a broadcast signal, a predefined way, a higher layer preconfigured way, or DCI. The broadcast signal may include, for example, an SIB, or a PBCH.

The network device may also transmit configuration information to the terminal, the configuration information includes at least one of a time window parameter, a state parameter, or a measurement configuration parameter. The configuration information may be used to determine a time window, a measurement configuration, a state, etc. in subsequent measurement procedures of the terminal.

As shown in FIG. 4, for a case where the terminal includes a first terminal and a second terminal, in case that the second terminal is in the sleep state, the first terminal measures the first signal to obtain a fifth measurement quantity. The fifth measurement quantity may be at a cell level, may be from a serving cell of the terminal, may be from an intra-frequency cell of the terminal, or may be from an inter-frequency cell of the terminal.

The first signal may be a received signal of the first terminal, for example, the first signal may include an LP-WUS and/or an LP-SS. The first measurement quantity may include at least one of RSRP of the first signal, an RSRQ of the first signal, or an SINR of the first signal. The RSRP of the first signal may be, for example, LP-RSRP, and the LP-RSRP represents a signal strength of the first signal. After receiving the first signal, the first terminal may filter the first signal, filter out a sideband to obtain a time domain waveform, perform sliding correlation on the time domain waveform, and obtain the strength of the first signal. The RSRQ of the first signal may be, for example, an LP-RSRQ, and the LP-RSRQ is a ratio of the LP-RSRP to an NR carrier RSSI. The RSSI represents, for N resource blocks in a measurement bandwidth, total received power of all signals observed on orthogonal frequency division multiplexing (OFDM) symbols for measuring RSSI. The SINR of the first signal may be, for example, an LP-SINR, and the LP-SINR is a ratio of reference signal power to interference noise power within the measurement bandwidth.

In an embodiment, after the first terminal measures the first signal and obtains the fifth measurement quantity, the terminal determines whether the fifth measurement quantity is less than or equal to a third threshold. In case that the fifth measurement quantity is less than or equal to the third threshold, it means that the fifth measurement quantity cannot meet a service standard of the terminal. As a result, when the second terminal is in the wake-up state, the second terminal is triggered to measure the second signal to obtain a seventh measurement quantity. In case that the fifth measurement quantity is greater than the third threshold, it means that the fifth measurement quantity may meet the service standard of the terminal. As a result, the second terminal does not measure the second signal.

In case that the second terminal is in the wake-up state, the second terminal measures the second signal to obtain the seventh measurement quantity. The seventh measurement quantity may be at the cell level, may be from the serving cell of the terminal, may be from the intra-frequency cell of the terminal, or may be from the inter-frequency cell of the terminal.

The second signal may be a received signal of the second terminal, for example, the second signal may include an SSB and/or a CSI-RS. The third measurement quantity may include at least one of RSRP of the second signal, an RSRQ of the second signal, or an SINR of the second signal. The RSRP of the second signal may be, for example, an SS-RSRP, and the SS-RSRP is a linear average of power of the second signal measured on second signal resource units, indicating a signal strength of the second signal. The RSRQ of the second signal may be, for example, an SS-RSRQ, and the SS-RSRQ is a ratio of the SS-RSRP to an NR carrier RSSI. The RSSI represents, for N resource blocks in the measurement bandwidth, total received power of all signals observed on the OFDM symbols for measuring RSSI. The SINR of the second signal may be, for example, an SS-SINR, and the SS-SINR is a ratio of reference signal power to interference noise power within the measurement bandwidth.

After obtaining the fifth measurement quantity and the seventh measurement quantity, the terminal may smooth the fifth measurement quantity and the seventh measurement quantity to obtain a third smoothed result. The smoothing may be performed by the first terminal or by the second terminal. In an embodiment, the second terminal may transmit the seventh measurement quantity to the first terminal, and the first terminal may smooth the fifth measurement quantity and the seventh measurement quantity to obtain the third smoothed result. The first may perform the smoothing at a physical layer or at a higher layer. The first terminal may also transmit the fifth measurement quantity to the second terminal, and the second terminal smooths the fifth measurement quantity and the seventh measurement quantity to obtain the third smoothed result. Since the fifth measurement quantity and the seventh measurement quantity are obtained by measurements from the first terminal and the second terminal respectively, the fifth measurement quantity and the seventh measurement quantity cannot be directly compared. After the smoothing, the fifth measurement quantity and the seventh measurement quantity may be compared to obtain the third smoothed result, and a next operation, such as a selection of a neighboring cell, may be determined based on the third smoothed result.

Since the first terminal measures the first signal when the second terminal is in the sleep state, obtains a corresponding first measurement quantity, and undertakes certain RRM measurement tasks, reducing a number of RRM measurements by the second terminal, after the second terminal is woken up, a number of RRM measurements required to be performed is reduced, which reduces a number of times the second terminal is woken up, and reduces power consumption of the second terminal.

In the above embodiments, the implementation procedure of way 2.1 is introduced, and an implementation procedure of way 2.2 is introduced below in conjunction with FIG. 5.

As shown in FIG. 5, the terminal includes a first device and a second device, the first device may measure a second signal, and the second device may measure a second signal. The second signal may be a received signal of the second device, for example, the second signal may include an SSB and/or a CSI-RS.

The network device may transmit configuration information to the terminal, the configuration information includes at least one of a time window parameter, a state parameter, or a measurement configuration parameter. The configuration information may be used to determine a time window, a measurement configuration, a state, etc. in subsequent measurement procedures of the terminal.

As shown in FIG. 5, for a case where the terminal includes a first terminal and a second terminal, in case that the second terminal is in the sleep state, the first terminal measures the second signal to obtain a sixth measurement quantity. The sixth measurement quantity may be at a cell level, may be from a serving cell of the terminal, may be from an intra-frequency cell of the terminal, or may be from an inter-frequency cell of the terminal.

The second signal may be a received signal of the second terminal, for example, the second signal may include an SSB and/or a CSI-RS. The sixth measurement quantity may include at least one of RSRP of the second signal, an RSRQ of the second signal, or an SS-SINR of the second signal. The RSRP of the second signal may be, for example, SS-RSRP, and the SS-RSRP is a linear average of power of the second signal measured on second signal resource units, indicating a signal strength of the second signal. After detecting the second signal, the first terminal may filter the second signal, filter out a sideband to obtain a time domain waveform, perform sliding correlation on the time domain waveform, and obtain the strength of the second signal. The RSRQ of the second signal may be, for example, an SS-RSRQ, and the SS-RSRQ is a ratio of the SS-RSRP to an NR carrier RSSI. The RSSI represents, for N resource blocks in the measurement bandwidth, total received power of all signals observed on the OFDM symbols for measuring RSSI. The SS-SINR of the second signal is a ratio of reference signal power to interference noise power within the measurement bandwidth.

In an embodiment, after the first terminal measures the second signal and obtains the sixth measurement quantity, the terminal determines whether the sixth measurement quantity is less than or equal to a fourth threshold. In case that the sixth measurement quantity is less than or equal to the fourth threshold, it means that the sixth measurement quantity cannot meet a service standard of the terminal. As a result, when the second terminal is in the wake-up state, the second terminal is triggered to measure the second signal to obtain a seventh measurement quantity. In case that the sixth measurement quantity is greater than the fourth threshold, it means that the sixth measurement quantity may meet the service standard of the terminal. As a result, the second terminal does not measure the second signal.

In case that the second terminal is in the wake-up state, the second terminal measures the second signal to obtain the seventh measurement quantity. The seventh measurement quantity may be at the cell level, may be from the serving cell of the terminal, may be from the intra-frequency cell of the terminal, or may be from the inter-frequency cell of the terminal.

The second signal may be a received signal of the second terminal, for example, the second signal may include an SSB and/or a CSI-RS. The seventh measurement quantity may include at least one of RSRP of the second signal, an RSRQ of the second signal, or an SINR of the second signal. The RSRP of the second signal may be, for example, an SS-RSRP, and the SS-RSRP is a linear average of power of the second signal measured on second signal resource units, indicating a signal strength of the second signal. The RSRQ of the second signal may be, for example, an SS-RSRQ, and the SS-RSRQ is a ratio of the SS-RSRP to an NR carrier RSSI. The RSSI represents, for N resource blocks in the measurement bandwidth, total received power of all signals observed on the OFDM symbols for measuring RSSI. The SINR of the second signal may be, for example, an SS-SINR, and the SS-SINR is a ratio of reference signal power to interference noise power within the measurement bandwidth.

After obtaining the sixth measurement quantity and the seventh measurement quantity, the terminal may smooth the sixth measurement quantity and the seventh measurement quantity to obtain a fourth smoothed result. The smoothing may be performed by the first terminal or by the second terminal. In an embodiment, the second terminal may transmit the seventh measurement quantity to the first terminal, and the first terminal may smooth the sixth measurement quantity and the seventh measurement quantity to obtain the fourth smoothed result. The first terminal may perform the smoothing at a physical layer or at a higher layer. The first terminal may also transmit the sixth measurement quantity to the second terminal, and the second terminal smooths the sixth measurement quantity and the seventh measurement quantity to obtain the fourth smoothed result. Since the sixth measurement quantity and the seventh measurement quantity are obtained by measurements from the first terminal and the second terminal respectively, the sixth measurement quantity and the seventh measurement quantity cannot be directly compared. After the smoothing, the sixth measurement quantity and the seventh measurement quantity may be compared to obtain the fourth smoothed result, and a next operation, such as a selection of a neighboring cell, may be determined based on the fourth smoothed result.

Since the first terminal measures the second signal when the second terminal is in the sleep state, obtains a corresponding second measurement quantity, and undertakes certain RRM measurement tasks, reducing a number of RRM measurements by the second terminal, after the second terminal is woken up, a number of RRM measurements required to be performed is reduced, which reduces a number of times the second terminal is woken up, and reduces power consumption of the second terminal.

An implementation procedure of way 2.3 is introduced below.

The terminal includes a first terminal and a second terminal, the first terminal may measure a first signal or a second signal, and the second terminal may measure a second signal. The first signal may be a received signal of the first terminal, for example, the first signal may include an LP-WUS and/or an LP-SS. The second signal may be a received signal of the second terminal, for example, the second signal may include an SSB and/or a CSI-RS.

In case that the first terminal is in the wake-up state, the first terminal measures the first signal in a fourth time window to obtain a fifth measurement quantity; and/or

in case that the first terminal is in the wake-up state, the first terminal measures the second signal in a fifth time window to obtain a sixth measurement quantity.

An implementation solution of the first terminal measuring the first signal in the fourth time window to obtain the fifth measurement quantity may be referred to the relevant introduction in way 2.1, and an implementation solution of the first terminal measuring the second signal in the fifth time window to obtain the sixth measurement quantity may be referred to the relevant introduction in way 2.2, which are not repeated here.

In case that the fifth measurement quantity is less than or equal to a third threshold, or the sixth measurement quantity is less than or equal to a fourth threshold, and the second terminal is in the wake-up state, the second terminal measures the second signal to obtain a seventh measurement quantity, of which an implementation procedure may be referred to the relevant introduction in way 2.1 and way 2.2, which are not repeated here.

In case that the second terminal is in the sleep state, after receiving the LP-WUS, the first terminal transmits a second trigger signal to the second terminal; and based on the second trigger signal, the second terminal measures, in a sixth time window, the second signal to obtain an eighth measurement quantity, where the measurement result includes the eighth measurement quantity.

The eighth measurement quantity obtained by the second measuring the second signal may include at least one of a received power parameter of the second signal, a signal-to-noise and interference ratio parameter of the second signal, or a received quality parameter of the second signal. A specific implementation procedure may be referred to the introduction of the above embodiments, which are not repeated here. It should be noted that in a procedure of determining the received power parameter of the second signal or the signal-to-noise and interference ratio parameter of the second signal, the level of the measurement unit in the measurement bandwidth may be determined based on whether the second terminal includes an IFFT module. If the second terminal includes an IFFT module, the measurement unit is any of an RE, an RB, or the measurement bandwidth of the second signal; if the second terminal does not include an IFFT module, the measurement unit is an RB or the measurement bandwidth of the second signal. In an embodiment, a measurement window involved in a procedure of calculating the received quality parameter of the second signal is the sixth time window.

As shown in FIG. 6, a terminal includes a first device and a second device, the first device may receive an LP-WUS to trigger the second device, and the second device may measure a second signal. The second signal may be a received signal of the second device, for example, the second signal may include an SSB and/or a CSI-RS.

A network device periodically/non-periodically transmits an LP-WUS to the terminal. In an embodiment, the periodicity or non-periodicity of the LP-WUS may be defined by one or more of a broadcast signal, a predefined way, a higher layer preconfigured way, or DCI. The broadcast signal may include, for example, an SIB, or a PBCH.

The network device may also transmit configuration information to the terminal, the configuration information includes at least one of a time window parameter, a state parameter, or a measurement configuration parameter. The configuration information may be used to determine a time window, a measurement configuration, a state, etc. in subsequent measurement procedures of the terminal.

The terminal includes a first terminal and a second terminal. The first terminal periodically or non-periodically receives an LP-WUS. After receiving the LP-WUS, the first terminal transmits a second trigger signal to the second terminal. Based on the second trigger signal, the second terminal measures, in a sixth time window, the second signal to obtain an eighth measurement quantity.

The second trigger signal may be a specific sequence or a voltage amplitude. The eighth measurement quantity may be at a cell level, and may be from a serving cell of the terminal, may be from an intra-frequency cell of the terminal, or may be from an inter-frequency cell of the terminal.

The second signal may be a received signal of the second terminal, for example, the second signal may include an SSB and/or a CSI-RS. The eighth measurement quantity may include at least one of RSRP of the second signal, an RSRQ of the second signal, or an SS-SINR of the second signal. The RSRP of the second signal may be, for example, an SS-RSRP, and the SS-RSRP is a linear average of power of the second signal measured on second signal resource units, indicating a signal strength of the second signal. The RSRQ of the second signal may be, for example, an SS-RSRQ, and the SS-RSRQ is a ratio of the SS-RSRP to an NR carrier RSSI. The RSSI represents, for N resource blocks in the measurement bandwidth, total received power of all signals observed on the OFDM symbols for measuring RSSI. The SS-SINR of the second signal is a ratio of reference signal power to interference noise power within the measurement bandwidth.

In the solution of the embodiments of the present application, the first terminal transmits the second trigger signal to trigger the second terminal to measure the second signal, and there is no need to perform a measurement every time the second terminal wakes up, which reduces a number of times the second terminal is woken up, and reduces power consumption of the second terminal.

FIG. 7 is a schematic structural diagram of a terminal according to an embodiment of the present application. As shown in FIG. 7, the terminal includes a memory 720, a transceiver 700 and a processor 710, where the memory 720 is used for storing a computer program; the transceiver 700 is used for receiving and transmitting data under control of the processor 710; and the processor 710 is used for reading the computer program in the memory 720 and performing following operations:

> receiving a signal transmitted from a network device, where the signal includes a first signal and/or a second signal; and
> measuring the first signal, and/or measuring the second signal, to obtain a measurement result.

In FIG. 7, a bus architecture may include any number of interconnected buses and bridges, which are linked together through various circuits of one or more processors represented by the processor 710 and one or more memories represented by the memory 720. The bus architecture may also link together various other circuits, such as peripherals, voltage regulators, and power management circuits, etc., which are well known in the art, and therefore are not further described in the present application. The bus interface provides an interface. The transceiver 700 may include multiple elements, i.e., including a transmitter and a receiver, units for providing communication with various other devices over transmission media including wireless channels, wired channels, fiber optic cables, and the like. For different user equipment, a user interface 730 may be an interface capable of externally or internally connecting the required equipment, and the connected equipment includes, but not limited to, a keypad, a display, a speaker, a microphone, a joystick, and the like.

The processor 710 is responsible for managing the bus architecture and general processing, and the memory 720 may store data used by the processor 710 when performing operations.

In some embodiment, the processor 710 may be a central processing unit (CPU), an application specific integrated circuit (ASIC), a field-programmable gate array (FPGA), or a complex programmable logic device (CPLD), the processor may also use a multi-core architecture.

The processor calls the computer program stored in the memory to execute any of the methods provided by the embodiments of the present application in accordance with the obtained executable instructions. The processor and the memory may be physically arranged separately.

In an embodiment, the first signal includes a low power wake-up signal (LP-WUS) and/or a low power synchronizing signal (LP-SS); and/or
the second signal includes a channel state information reference signal (CSI-RS) and/or a synchronization signal/physical broadcast channel (PBCH) block (SSB).

In an embodiment, the measurement result includes at least one of:

> a received power parameter of the signal;
> a signal-to-noise and interference ratio parameter of the signal; or
> a received quality parameter of the signal.

In an embodiment, the received power parameter of the signal satisfies:

$$P = \frac{P_1^r + P_2^r + \dots + P_M^r}{M},$$

where P is the received power parameter of the signal; M is a number of measurement units included in a measurement bandwidth for the signal, and M is a positive integer greater than or equal to 1; and $P_i^r$ is received power of the signal in an i-th measurement unit of the measurement bandwidth, and i ∈ [1, M].

In an embodiment, the signal-to-noise and interference ratio parameter of the signal satisfies:

$$S = \frac{S_1^r + S_2^r + \dots + S_M^r}{M},$$

where S is the signal-to-noise and interference ratio parameter of the signal; M is a number of measurement units included in a measurement bandwidth for the signal, and M is a positive integer greater than or equal to 1; and $S_i^r$ is a signal-to-noise and interference ratio of the signal in an i-th measurement unit of the measurement bandwidth, i ∈ [1,M], and

$$S_i^r = \frac{P_i^r}{Z_i^r + G_i^r},$$

where $P_i^r$ is received power of the signal in the i-th measurement unit; $Z_i^r$ is received power of a noise signal in the i-th measurement unit; and $G_i^r$ is received power of an interference signal in the i-th measurement unit.

In an embodiment, the measurement unit is any of:

> a resource element (RE);
> a resource block (RB); or
> a measurement bandwidth.

In an embodiment, in case that the terminal includes an inverse fast Fourier transform (IFFT) module, the measurement unit is any of: a resource element (RE), a resource block (RB), or a measurement bandwidth; or in case that the terminal does not includes an inverse fast Fourier transform (IFFT) module, the measurement unit is any of: a resource block (RB), or a measurement bandwidth.

In an embodiment, the received quality parameter of the signal satisfies:

$$Q = (N * P)/R,$$

where Q is the received quality parameter of the signal; N is a number of resource blocks (RBs) included in a measurement bandwidth for the signal, and N is a positive integer greater than or equal to 1; P is the received power parameter of the signal; and R is a received signal strength indicator of the signal.

In an embodiment, the received signal strength indicator satisfies:

$$R = \frac{P_1^o + P_2^o + ... + P_K^o}{K},$$

where R is the received signal strength indicator of the signal; K is a number of orthogonal frequency division multiplexing (OFDM) symbols included in a measurement window for the signal, and K is an integer greater than or equal to 1; and $P_j^o$ is total received power of the signal, an interference signal, and a noise signal on a j-th OFDM symbol in the measurement window.

In an embodiment, the terminal includes a low power wake-up receiver (LP-WUR) and a main radio (MR), and measuring the first signal, and/or measuring the second signal, to obtain the measurement result includes:

> in case that the MR is in a sleep state, measuring, by the LP-WUR, the first signal and/or the second signal to obtain the measurement result, and/or in case that the MR is in a wake-up state, measuring, by the MR, the second signal to obtain the measurement result; or
> in case that the MR is in a sleep state, measuring, by the MR, the second signal based on a first trigger signal to obtain the measurement result.

In an embodiment, in case that the MR is in the sleep state, measuring, by the LP-WUR, the first signal and/or the second signal to obtain the measurement result, and/or in case that the MR is in the wake-up state, measuring, by the MR, the second signal to obtain the measurement result includes:

> in case that the MR is in the sleep state, measuring, by the LP-WUR, the first signal to obtain a first measurement quantity, and/or measuring, by the LP-WUR, the second signal to obtain a second measurement quantity; and/or
> in case that the first measurement quantity is less than or equal to a first threshold, or the second measurement quantity is less than or equal to a second threshold, and the MR is in the wake-up state, measuring, by the MR, the second signal to obtain a third measurement quantity,
> where the measurement result includes at least one of the first measurement quantity, the second measurement quantity, or the third measurement quantity.

In an embodiment, in case that the MR is in the sleep state, measuring, by the LP-WUR, the first signal to obtain the first measurement quantity, and/or measuring, by the LP-WUR, the second signal to obtain the second measurement quantity includes:

> in case that the LP-WUR is in the wake-up state, measuring, by the LP-WUR, the first signal in a first time window to obtain the first measurement quantity; and/or
> in case that the LP-WUR is in the wake-up state, measuring, by the LP-WUR, the second signal in a second time window to obtain the second measurement quantity.

In an embodiment, the processor is further used for reading the computer program in the memory and performing following operations:
smoothing the first measurement quantity and the third measurement quantity to obtain a first smoothed result; and smoothing the second measurement quantity and the third measurement quantity to obtain a second smoothed result.

In an embodiment, in case that the MR is in the sleep state, measuring, by the MR, the second signal based on the first trigger signal to obtain the measurement result includes:

> in case that the MR is in the sleep state, transmitting, by the LP-WUR, the first trigger signal to the MR after receiving the LP-WUS; and measuring, by the MR, in a third time window, the second signal based on the first trigger signal to obtain a fourth measurement quantity,
> where the measurement result includes the fourth measurement quantity.

In an embodiment, the terminal includes a first terminal and a second terminal, and measuring the first signal, and/or measuring the second signal, to obtain the measurement result includes:

in case that the second terminal is in a sleep state, measuring, by the first terminal, the first signal and/or the second signal to obtain the measurement result, and/or in case that the second terminal is in a wake-up state, measuring, by the second terminal, the second signal to obtain the measurement result; or in case that the second terminal is in a sleep state, measuring, by the second terminal, the second signal based on a second trigger signal to obtain the measurement result.

In an embodiment, in case that the second terminal is in the sleep state, measuring, by the first terminal, the first signal and/or the second signal to obtain the measurement result, and/or in case that the second terminal is in the wake-up state, measuring, by the second terminal, the second signal to obtain the measurement result includes:

in case that the second terminal is in the sleep state, measuring, by the first terminal, the first signal to obtain a fifth measurement quantity, and/or measuring, by the first terminal, the second signal to obtain a sixth measurement quantity; and/or in case that the fifth measurement quantity is less than or equal to a third threshold, or the sixth measurement quantity is less than or equal to a fourth threshold, and the second terminal is in the wake-up state, measuring, by the second terminal, the second signal to obtain a seventh measurement quantity, where the measurement result includes at least one of the fifth measurement quantity, the sixth measurement quantity, or the seventh measurement quantity.

In an embodiment, in case that the second terminal is in the sleep state, measuring, by the first terminal, the first signal to obtain the fifth measurement quantity, and/or measuring, by the first terminal, the second signal to obtain the sixth measurement quantity includes:

in case that the first terminal is in the wake-up state, measuring, by the first terminal, the first signal in a fourth time window to obtain the fifth measurement quantity; and/or in case that the first terminal is in the wake-up state, measuring, by the first terminal, the second signal in a fifth time window to obtain the sixth measurement quantity.

In an embodiment, in case that the second terminal is in the sleep state, measuring, by the second terminal, the second signal based on the second trigger signal to obtain the measurement result includes:

in case that the second terminal is in the sleep state, transmitting, by the first terminal, the second trigger signal to the second terminal after receiving the LP-WUS; and measuring, by the second terminal, in a sixth time window, the second signal based on the second trigger signal to obtain an eighth measurement quantity, where the measurement result includes the eighth measurement quantity.

In an embodiment, the processor is further used for reading the computer program in the memory and performing following operations:
smoothing the fifth measurement quantity and the seventh measurement quantity to obtain a third smoothed result; and smoothing the sixth measurement quantity and the seventh measurement quantity to obtain a fourth smoothed result.

In an embodiment, the processor is further used for reading the computer program in the memory and performing following operations:

receiving configuration information transmitted from the network device, where the configuration information includes at least one of a time window parameter, a state parameter, or a measurement configuration parameter, where
the time window parameter includes at least one of a first time window parameter, a second time window parameter, a third time window parameter, a fourth time window parameter, a fifth time window parameter, or a sixth time window parameter, where
the first time window parameter is used to indicate a first time window, and the first time window parameter includes at least one of: a period of the first time window, a start time of the first time window, or an end time of the first time window;
the second time window parameter is used to indicate a second time window, and the second time window parameter includes at least one of: a period of the second time window, a start time of the second time window, or an end time of the second time window;
the third time window parameter is used to indicate a third time window, and the third time window parameter includes at least one of: a period of the third time window, a start time of the third time window, or an end time of the third time window;
the fourth time window parameter is used to indicate a fourth time window, and the fourth time window parameter includes at least one of: a period of the fourth time window, a start time of the fourth time window, or an end time of the fourth time window;
the fifth time window parameter is used to indicate a fifth time window, and the fifth time window parameter includes at least one of: a period of the fifth time window, a start time of the fifth time window, or an end time of the fifth time window; and

the sixth time window parameter is used to indicate a sixth time window, and the sixth time window parameter includes at least one of: a period of the sixth time window, a start time of the sixth time window, or an end time of the sixth time window;

the state parameter includes at least one of a first state parameter, a second state parameter, or a third state parameter, where

the first state parameter is used to indicate that the MR is in the sleep state or a second terminal is in the sleep state, and the first state parameter includes at least one of a period of a first state, a first duration, or a start time of a first state;

the second state parameter is used to indicate that the MR is in the wake-up state or the second terminal is in the wake-up state, and the second state parameter includes at least one of a period of a second state, a second duration, or a start time of a second state; and

the third state parameter is used to indicate that the LP-WUR is in the wake-up state or a first terminal is in the wake-up state, and the third state parameter includes at least one of a period of a third state, a third duration, or a start time of a third state; and

the measurement configuration parameter includes at least one of a measurement object, measurement reporting, a measurement identifier, a measurement quantity configuration, measurement threshold enabling, a measurement interval, or a measurement gap allocation.

In an embodiment, the configuration information is carried by one or more of:

a broadcast signal;
a protocol predefined signaling;
a higher layer preconfigured signaling; or
downlink control information (DCI).

It should be noted here that the above terminal provided by the embodiments of the present application may implement all the method steps implemented by the above method embodiments performed by the terminal, and may achieve the same effect. The same parts and beneficial effects as the method embodiments are not repeated in the present application.

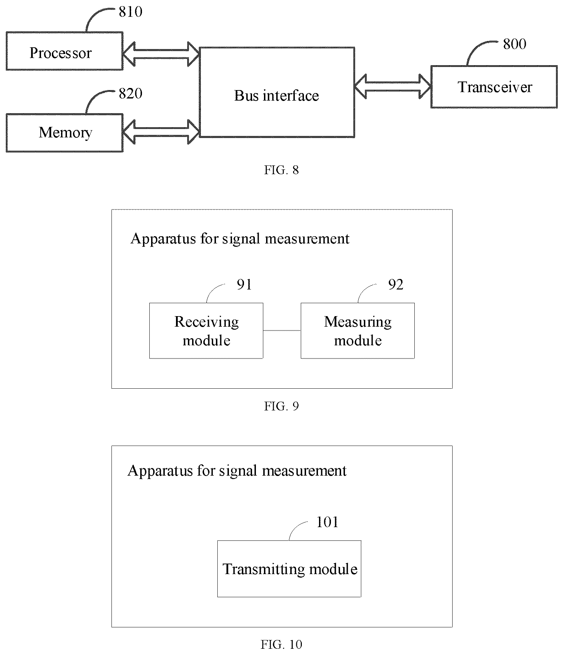

FIG. 8 is a schematic structural diagram of a network device according to an embodiment of the present application. As shown in FIG. 8, As shown in FIG. 8, the network device includes a memory 820, a transceiver 800 and a processor 810,

where the memory 820 is used for storing a computer program; the transceiver 800 is used for receiving and transmitting data under control of the processor 810; and the processor 810 is used for reading the computer program in the memory 820 and performing following operations:

transmitting a signal to a terminal, where the signal includes a first signal and/or a second signal, where the first signal includes a low power wake-up signal (LP-WUS) and/or a low power synchronizing signal (LP-SS); and/or

the second signal includes a channel state information reference signal (CSI-RS) and/or a synchronization signal/physical broadcast channel (PBCH) block (SSB).

In an embodiment, the transceiver 800 is used for receiving and transmitting data under control of the processor 810.

In FIG. 8, a bus architecture may include any number of interconnected buses and bridges, which are linked together through various circuits of one or more processors represented by the processor 810 and one or more memories represented by the memory 820. The bus architecture may also link together various other circuits, such as peripherals, voltage regulators, and power management circuits, etc., which are well known in the art, and therefore are not further described in the present application. The bus interface provides an interface. The transceiver 800 may include multiple elements, i.e., including a transmitter and a receiver, units for providing communication with various other devices over transmission media including wireless channels, wired channels, fiber optic cables, and the like. The processor 810 is responsible for managing the bus architecture and general processing, and the memory 820 may store data used by the processor 810 when performing operations.

In an embodiment, the processor 810 may be a CPU, an ASIC, an FPGA, or a CPLD, the processor may also use a multi-core architecture.

The processor calls the computer program stored in the memory to execute any of the methods provided by the embodiments of the present application in accordance with the obtained executable instructions. The processor and the memory may be physically arranged separately.

In an embodiment, the processor is further used for reading the computer program in the memory and performing following operations:

transmitting configuration information to the terminal, where the configuration information includes at least one of a time window parameter, a state parameter, or a measurement configuration parameter, where

the time window parameter includes at least one of a first time window parameter, a second time window parameter, a third time window parameter, a fourth time window parameter, a fifth time window parameter, or a sixth time window parameter, where

the first time window parameter is used to indicate a first time window, and the first time window parameter includes at least one of: a period of the first time window, a start time of the first time window, or an end time of the first time window;

the second time window parameter is used to indicate a second time window, and the second time window parameter includes at least one of: a period of the second time window, a start time of the second time window, or an end time of the second time window;

the third time window parameter is used to indicate a third time window, and the third time window parameter includes at least one of: a period of the third time window, a start time of the third time window, or an end time of the third time window;

the fourth time window parameter is used to indicate a fourth time window, and the fourth time window parameter includes at least one of: a period of the fourth time window, a start time of the fourth time window, or an end time of the fourth time window;

the fifth time window parameter is used to indicate a fifth time window, and the fifth time window parameter includes at least one of: a period of the fifth time window, a start time of the fifth time window, or an end time of the fifth time window; and

the sixth time window parameter is used to indicate a sixth time window, and the sixth time window parameter includes at least one of: a period of the sixth time window, a start time of the sixth time window, or an end time of the sixth time window;

the state parameter includes at least one of a first state parameter, a second state parameter, or a third state parameter, where

the first state parameter is used to indicate that a master radio (MR) is in a sleep state or a second terminal is in a sleep state, and the first state parameter includes at least one of a period of a first state, a first duration, or a start time of a first state;

the second state parameter is used to indicate that the MR is in a wake-up state or the second terminal is in a wake-up state, and the second state parameter includes at least one of a period of a second state, a second duration, or a start time of a second state; and

the third state parameter is used to indicate that a low power wake-up receiver (LP-WUR) is in the wake-up state or a first terminal is in the wake-up state, and the third state parameter includes at least one of a period of a third state, a third duration, or a start time of a third state; and

the measurement configuration parameter includes at least one of a measurement object, measurement reporting, a measurement identifier, a measurement quantity configuration, measurement threshold enabling, a measurement interval, or a measurement gap allocation.

In an embodiment, the configuration information is carried by one or more of:

a broadcast signal;
a protocol predefined signaling;
a higher layer preconfigured signaling; or
downlink control information (DCI).

It should be noted here that the above network device provided by the embodiments of the present application may implement all the method steps implemented by the above method embodiments performed by the network device, and may achieve the same effect. The same parts and beneficial effects as the method embodiments are not repeated in the present application.

FIG. 9 is a first schematic structural diagram of an apparatus for signal measurement according to an embodiment of the present application. As shown in FIG. 9, the apparatus for signal measurement includes:

a receiving module 91, used for receiving a signal transmitted from a network device, where the signal includes a first signal and/or a second signal; and
a measuring module 92, used for measuring the first signal, and/or measuring the second signal, to obtain a measurement result.

In an embodiment, the first signal includes a low power wake-up signal (LP-WUS) and/or a low power synchronizing signal (LP-SS); and/or
the second signal includes a channel state information reference signal (CSI-RS) and/or a synchronization signal/physical broadcast channel (PBCH) block (SSB).

In an embodiment, the measurement result includes at least one of:

a received power parameter of the signal;
a signal-to-noise and interference ratio parameter of the signal; or
a received quality parameter of the signal.

In an embodiment, the received power parameter of the signal satisfies:

$$P = \frac{P_1^r + P_2^r + \ldots + P_M^r}{M},$$

where P is the received power parameter of the signal; M is a number of measurement units included in a measurement bandwidth for the signal, and M is a positive integer greater than or equal to 1; and $P_i^r$ is received power of the signal in an i-th measurement unit of the measurement bandwidth, and i ∈ [1, M].

In an embodiment, the signal-to-noise and interference ratio parameter of the signal satisfies:

$$S = \frac{S_1^r + S_2^r + \ldots + S_M^r}{M},$$

where S is the signal-to-noise and interference ratio parameter of the signal; M is a number of measurement units included in a measurement bandwidth for the signal, and M is a positive integer greater than or equal to 1; and $S_i^r$ is a signal-to-noise and interference ratio of the signal in an i-th measurement unit of the measurement bandwidth, $i \in [1,M]$, and

$$S_i^r = \frac{P_i^r}{Z_i^r + G_i^r},$$

where $P_i^r$ is received power of the signal in the i-th measurement unit; $Z_i^r$ is received power of a noise signal in the i-th measurement unit; and $G_i^r$ is received power of an interference signal in the i-th measurement unit.

In an embodiment, the measurement unit is any of:

> a resource element (RE);
> a resource block (RB); or
> a measurement bandwidth.

In an embodiment, in case that a terminal includes an inverse fast Fourier transform (IFFT) module, the measurement unit is any of: a resource element (RE), a resource block (RB), or a measurement bandwidth; or in case that a terminal does not includes an inverse fast Fourier transform (IFFT) module, the measurement unit is any of: a resource block (RB), or a measurement bandwidth.

In an embodiment, the received quality parameter of the signal satisfies:

$$Q = (N * P)/R,$$

where Q is the received quality parameter of the signal; N is a number of resource blocks (RBs) included in a measurement bandwidth for the signal, and N is a positive integer greater than or equal to 1; P is the received power parameter of the signal; and R is a received signal strength indicator of the signal.

In an embodiment, the received signal strength indicator satisfies:

$$R = \frac{P_1^o + P_2^o + \ldots + P_K^o}{K},$$

where R is the received signal strength indicator of the signal; K is a number of orthogonal frequency division multiplexing (OFDM) symbols included in a measurement window for the signal, and K is an integer greater than or equal to 1; and $P_j^o$ is total received power of the signal, an interference signal, and a noise signal on a j-th OFDM symbol in the measurement window.

In an embodiment, a terminal includes a low power wake-up receiver (LP-WUR) and a main radio (MR), and the measuring module 92 is used for:

> in case that the MR is in a sleep state, measuring, by the LP-WUR, the first signal and/or the second signal to obtain the measurement result, and/or in case that the MR is in a wake-up state, measuring, by the MR, the second signal to obtain the measurement result; or
> in case that the MR is in a sleep state, measuring, by the MR, the second signal based on a first trigger signal to obtain the measurement result.

In an embodiment, the measuring module 92 is used for:

> in case that the MR is in the sleep state, measuring, by the LP-WUR, the first signal to obtain a first measurement quantity, and/or measuring, by the LP-WUR, the second signal to obtain a second measurement quantity; and/or
> in case that the first measurement quantity is less than or equal to a first threshold, or the second measurement quantity is less than or equal to a second threshold, and the MR is in the wake-up state, measuring, by the MR, the second signal to obtain a third measurement quantity,
> where the measurement result includes at least one of the first measurement quantity, the second measurement quantity, or the third measurement quantity.

In an embodiment, the measuring module 92 is used for:

> in case that the LP-WUR is in the wake-up state, measuring, by the LP-WUR, the first signal in a first time window to obtain the first measurement quantity; and/or
> in case that the LP-WUR is in the wake-up state, measuring, by the LP-WUR, the second signal in a second time window to obtain the second measurement quantity.

In an embodiment, the measuring module 92 is further used for smoothing the first measurement quantity and the third measurement quantity to obtain a first smoothed result; and smoothing the second measurement quantity and the third measurement quantity to obtain a second smoothed result.

In an embodiment, the measuring module 92 is used for:

> in case that the MR is in the sleep state, transmitting, by the LP-WUR, the first trigger signal to the MR after receiving the LP-WUS; and measuring, by the MR, in a third time window, the second signal based on the first trigger signal to obtain a fourth measurement quantity,

where the measurement result includes the fourth measurement quantity.

In an embodiment, a terminal includes a first terminal and a second terminal, and the measuring module 92 is used for:

in case that the second terminal is in a sleep state, measuring, by the first terminal, the first signal and/or the second signal to obtain the measurement result, and/or in case that the second terminal is in a wake-up state, measuring, by the second terminal, the second signal to obtain the measurement result; or in case that the second terminal is in a sleep state, measuring, by the second terminal, the second signal based on a second trigger signal to obtain the measurement result.

In an embodiment, the measuring module 92 is used for:

in case that the second terminal is in the sleep state, measuring, by the first terminal, the first signal to obtain a fifth measurement quantity, and/or measuring, by the first terminal, the second signal to obtain a sixth measurement quantity; and/or in case that the fifth measurement quantity is less than or equal to a third threshold, or the sixth measurement quantity is less than or equal to a fourth threshold, and the second terminal is in the wake-up state, measuring, by the second terminal, the second signal to obtain a seventh measurement quantity, where the measurement result includes at least one of the fifth measurement quantity, the sixth measurement quantity, or the seventh measurement quantity.

In an embodiment, the measuring module 92 is used for:

in case that the first terminal is in the wake-up state, measuring, by the first terminal, the first signal in a fourth time window to obtain the fifth measurement quantity; and/or in case that the first terminal is in the wake-up state, measuring, by the first terminal, the second signal in a fifth time window to obtain the sixth measurement quantity.

In an embodiment, the measuring module 92 is used for:

in case that the second terminal is in the sleep state, transmitting, by the first terminal, the second trigger signal to the second terminal after receiving the LP-WUS; and measuring, by the second terminal, in a sixth time window, the second signal based on the second trigger signal to obtain an eighth measurement quantity,

where the measurement result includes the eighth measurement quantity.

In an embodiment, the measuring module 92 is further used for:
smoothing the fifth measurement quantity and the seventh measurement quantity to obtain a third smoothed result; and smoothing the sixth measurement quantity and the seventh measurement quantity to obtain a fourth smoothed result.

In an embodiment, the receiving module 91 is further used for:

receiving configuration information transmitted from the network device, where the configuration information includes at least one of a time window parameter, a state parameter, or a measurement configuration parameter, where
the time window parameter includes at least one of a first time window parameter, a second time window parameter, a third time window parameter, a fourth time window parameter, a fifth time window parameter, or a sixth time window parameter, where
the first time window parameter is used to indicate a first time window, and the first time window parameter includes at least one of: a period of the first time window, a start time of the first time window, or an end time of the first time window;
the second time window parameter is used to indicate a second time window, and the second time window parameter includes at least one of: a period of the second time window, a start time of the second time window, or an end time of the second time window;
the third time window parameter is used to indicate a third time window, and the third time window parameter includes at least one of: a period of the third time window, a start time of the third time window, or an end time of the third time window;
the fourth time window parameter is used to indicate a fourth time window, and the fourth time window parameter includes at least one of: a period of the fourth time window, a start time of the fourth time window, or an end time of the fourth time window;
the fifth time window parameter is used to indicate a fifth time window, and the fifth time window parameter includes at least one of: a period of the fifth time window, a start time of the fifth time window, or an end time of the fifth time window; and
the sixth time window parameter is used to indicate a sixth time window, and the sixth time window parameter includes at least one of: a period of the sixth time window, a start time of the sixth time window, or an end time of the sixth time window;
the state parameter includes at least one of a first state parameter, a second state parameter, or a third state parameter, where
the first state parameter is used to indicate that the MR is in the sleep state or a second terminal is in the sleep state, and the first state parameter includes at least one of a period of a first state, a first duration, or a start time of a first state;
the second state parameter is used to indicate that the MR is in the wake-up state or the second terminal is in the wake-up state, and the second state parameter includes at least one of a period of a second state, a second duration, or a start time of a second state; and
the third state parameter is used to indicate that the LP-WUR is in the wake-up state or a first terminal is in the wake-up state, and the third state parameter includes at least one of a period of a third state, a third duration, or a start time of a third state; and
the measurement configuration parameter includes at least one of a measurement object, measurement reporting, a measurement identifier, a measurement quantity configuration, measurement threshold enabling, a measurement interval, or a measurement gap allocation.

In an embodiment, the configuration information is carried by one or more of:

a broadcast signal;
a protocol predefined signaling;
a higher layer preconfigured signaling; or
downlink control information (DCI).

FIG. 10 is a second schematic structural diagram of an apparatus for signal measurement according to an embodiment of the present application. As shown in FIG. 10, the apparatus for signal measurement includes:

a transmitting module 101, used for transmitting a signal to a terminal, where the signal includes a first signal and/or a second signal, where
the first signal includes a low power wake-up signal (LP-WUS) and/or a low power synchronizing signal (LP-SS); and/or
the second signal includes a channel state information reference signal (CSI-RS) and/or a synchronization signal/physical broadcast channel (PBCH) block (SSB).

In an embodiment, the transmitting module 101 is further used for:

transmitting configuration information to the terminal, where the configuration information includes at least one of a time window parameter, a state parameter, or a measurement configuration parameter, where
the time window parameter includes at least one of a first time window parameter, a second time window parameter, a third time window parameter, a fourth time window parameter, a fifth time window parameter, or a sixth time window parameter, where
the first time window parameter is used to indicate a first time window, and the first time window parameter includes at least one of: a period of the first time window, a start time of the first time window, or an end time of the first time window;
the second time window parameter is used to indicate a second time window, and the second time window parameter includes at least one of: a period of the second time window, a start time of the second time window, or an end time of the second time window;
the third time window parameter is used to indicate a third time window, and the third time window parameter includes at least one of: a period of the third time window, a start time of the third time window, or an end time of the third time window;
the fourth time window parameter is used to indicate a fourth time window, and the fourth time window parameter includes at least one of: a period of the fourth time window, a start time of the fourth time window, or an end time of the fourth time window;
the fifth time window parameter is used to indicate a fifth time window, and the fifth time window parameter includes at least one of: a period of the fifth time window, a start time of the fifth time window, or an end time of the fifth time window; and
the sixth time window parameter is used to indicate a sixth time window, and the sixth time window parameter includes at least one of: a period of the sixth time window, a start time of the sixth time window, or an end time of the sixth time window;
the state parameter includes at least one of a first state parameter, a second state parameter, or a third state parameter, where
the first state parameter is used to indicate that a master radio (MR) is in a sleep state or a second terminal is in a sleep state, and the first state parameter includes at least one of a period of a first state, a first duration, or a start time of a first state;
the second state parameter is used to indicate that the MR is in a wake-up state or the second terminal is in a wake-up state, and the second state parameter includes at least one of a period of a second state, a second duration, or a start time of a second state; and
the third state parameter is used to indicate that a low power wake-up receiver (LP-WUR) is in the wake-up state or a first terminal is in the wake-up state, and the third state parameter includes at least one of a period of a third state, a third duration, or a start time of a third state; and
the measurement configuration parameter includes at least one of a measurement object, measurement reporting, a measurement identifier, a measurement quantity configuration, measurement threshold enabling, a measurement interval, or a measurement gap allocation.

In an embodiment, the configuration information is carried by one or more of:

a broadcast signal;
a protocol predefined signaling;
a higher layer preconfigured signaling; or
downlink control information (DCI).

It should be noted here that the above apparatus for signal measurement provided by the embodiments of the present application may implement all the method steps implemented by the above method embodiments performed by the terminal, and may achieve the same effect. The same parts and beneficial effects as the method embodiments are not repeated in the present application.

It should be noted that, the division of units/modules in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a processor-readable storage medium. Based on such understanding, the solutions of the present application in essence or a part of the solutions that contributes to the prior art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes such as a flash drive, a mobile hard disk, a read-only memory (ROM), a random access memory (RAM), a magnetic disk, or a compact disk.

An embodiment of the present application provides a computer-readable storage medium storing a computer program, where the computer program is used for causing a computer to perform any of the methods for signal measurement provided by the above method embodiments.

The computer-readable storage medium provided by the embodiments of the present application may implement all the method steps implemented by the above method embodiments, and may achieve the same effect. The same parts and beneficial effects as the method embodiments are not repeated here.

It should be noted that the computer-readable storage medium may be any available medium or data storage device that may be accessed by the computer, including but not limited to, a magnetic storage (e.g., a floppy disk, a hard disk, a magnetic tape, a magneto-optical disk (MO), etc.), an optical memory (such as CD, DVD, BD, HVD, etc.), and a semiconductor memory (such as ROM, EPROM, EEPROM, a non-volatile memory (NAND FLASH), a solid-state drive (SSD)), etc.

It should be further noted that, in the embodiments of the present application, the terms "first", "second", etc. are used to distinguish similar objects, rather than to describe a specific order or sequence. It should be understood that the terms used in this way may be interchanged under appropriate circumstances, and the embodiments of the present application may be implemented in an order other than those illustrated or described herein. The objects distinguished by "first" and "second" are usually of the same category, and do not limit the number of objects. For example, the first object may be one or multiple.

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that the associated objects have an "or" relationship.

In the embodiments of the present application, the term "multiple" refers to two or more than two, and other quantifiers are similar to it.

The solutions according to the embodiments of the present application may be applicable to various systems, especially 5G system. For example, the applicable systems may be a global system of mobile communication (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These various systems include a terminal device and a network device, and may further include a core network part, such as an evolved packet system (EPS), a 5G system (5GS), and the like.

The terminal device in the embodiments of the present application may be a device that provides voice and/or data connectivity to a user, a handheld device with a wireless connection function, or other processing devices connected to a wireless modem. In different systems, the names of the terminal may be different. For example, in the 5G system, the terminal device may be called as a user equipment (UE). A wireless terminal device may communicate with one or more core networks (CNs) via a radio access network (RAN), and the wireless terminal device may be a mobile terminal device, such as a mobile phone (or cellular phone), a computer with mobile terminal device, e.g., a portable mobile device, a pocket-sized mobile device, a handheld mobile device, a computer-built mobile device or a vehicle-mounted mobile device, which exchange language and/or data with the radio access network. For example, a personal communication service (PCS) phone, a radio phone, a session initiated protocol (SIP) phone, a wireless local loop (WLL) station, a personal digital assistant (PDA) and other devices. A wireless terminal device may also be called a system, a subscriber unit, a subscriber station, a mobile station, a mobile, a remote station, an access point, a remote terminal, an access terminal, a user terminal, a user agent, or a user device, which is not limited in the embodiments of the present application.

The network device in the embodiments of the present application may be a base station, and the base station may include multiple cells providing services for the terminal device. Depending on the specific scenario, the base station may be called an access point, or a device communicating with a wireless terminal device through one or more sectors on the air interface in the access network, or other names. The network device may be used for exchanging received air frames with internet protocol (IP) packets, and acting as a router between the wireless terminal device and the rest of the access network, where the rest of the access network may include an IP communication network. The network device may also coordinate attribute management for the air interface. For example, the network device in the embodiments of the present application may be a base transceiver station (BTS) in a global system for mobile communications (GSM) or a code division multiple access (CDMA), a node B in a wide-band code division multiple access (WCDMA), an evolutional node B (eNB or e-Node B) in a long term evolution (LTE) system, a 5G base station (gNB) in 5G network architecture (next generation system), a home evolved node B (HeNB), a relay node, a femto, or a pico base station (pico), etc., which is not limited in the embodiments of the present application. In some network structures, the network device may include a centralized unit (CU) node and a distributed unit (DU) node, and the centralized unit and the distributed unit may be geographically separated.

A multi-input multi-output (MIMO) transmission may be performed between the network device and the terminal device by using one or more antennas. The MIMO transmission may be single-user MIMO (SU-MIMO) or multi-user MIMO (MU-MIMO). Depending on the form and number of antenna combinations, MIMO transmission may be 2D-MIMO, 3D-MIMO, FD-MIMO or massive-MIMO, and may also be diversity transmission, precoding transmission, beamforming transmission, etc.

As will be appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It will be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It will be apparent to those skilled in the art that various modifications and variations may be made in the present application without departing from the scope of the present application. Thus, provided that these modifications and variations of the present application fall within the scope of the claims of the present application and their equivalents, the present application is also intended to cover such modifications and variations.

**Claims**

1. A method for signal measurement, performed by a terminal, comprising:

   receiving a signal transmitted from a network device, wherein the signal comprises a first signal and/or a second signal; and
   measuring the first signal, and/or measuring the second signal, to obtain a measurement result.

2. The method of claim 1, wherein the first signal comprises a low power wake-up signal (LP-WUS) and/or a low power synchronizing signal (LP-SS); and/or the second signal comprises a channel state information reference signal (CSI-RS) and/or a synchronization signal/physical broadcast channel (PBCH) block (SSB).

3. The method of claim 1 or 2, wherein the measurement result comprises at least one of:

   a received power parameter of the signal;
   a signal-to-noise and interference ratio parameter of the signal; or
   a received quality parameter of the signal.

4. The method of claim 3, wherein the received power parameter of the signal satisfies:

$$P = \frac{P_1^r + P_2^r + \ldots + P_M^r}{M},$$

   wherein P is the received power parameter of the signal; M is a number of measurement units comprised in a measurement bandwidth for the signal, and M is a positive integer greater than or equal to 1; and $P_i^r$ is received power of the signal in an i-th measurement unit of the measurement bandwidth, and $i \in [1, M]$.

5. The method of claim 3, wherein the signal-to-noise and interference ratio parameter of the signal satisfies:

$$S = \frac{S_1^r + S_2^r + \ldots + S_M^r}{M},$$

   wherein S is the signal-to-noise and interference ratio parameter of the signal; M is a number of measurement units comprised in a measurement bandwidth for the signal, and M is a positive integer greater than or equal to 1; and $S_i^r$ is a signal-to-noise and interference ratio of the signal in an i-th measurement unit of the measurement bandwidth, $i \in [1, M]$, and

$$S_i^r = \frac{P_i^r}{Z_i^r + G_i^r},$$

   wherein $P_i^r$ is received power of the signal in the i-th measurement unit; $Z_i^r$ is received power of a noise signal in the i-th measurement unit; and $G_i^r$ is received power of an interference signal in the i-th measurement unit.

6. The method of claim 4 or 5, wherein the measurement unit is any of:

   a resource element (RE);
   a resource block (RB); or
   a measurement bandwidth.

7. The method of claim 4 or 5, wherein

   in case that the terminal comprises an inverse fast Fourier transform (IFFT) module, the measurement unit is any of: a resource element (RE), a resource block (RB), or a measurement bandwidth; or
   in case that the terminal does not comprises an inverse fast Fourier transform (IFFT) module, the measurement unit is any of: a resource block (RB), or a measurement bandwidth.

8. The method of claim 3, wherein the received quality parameter of the signal satisfies:

$$Q = (N * P)/R,$$

   wherein Q is the received quality parameter of the signal; N is a number of resource blocks (RBs) comprised in a measurement bandwidth for the signal, and N is a positive integer greater than or equal to 1; P is the received power parameter of the signal; and R is a received signal strength indicator of the signal.

9. The method of claim 8, wherein the received signal strength indicator satisfies:

$$R = \frac{P_1^o + P_2^o + \ldots + P_K^o}{K},$$

   wherein R is the received signal strength indicator of the signal; K is a number of orthogonal frequency division multiplexing (OFDM) symbols comprised in a measurement window for the signal, and K is an integer greater than or equal to 1; and $P_j^o$ is total received power of the signal, an interference signal, and a noise signal on a j-th OFDM symbol in the measurement window.

**10.** The method of claim 2, wherein the terminal comprises a low power wake-up receiver (LP-WUR) and a main radio (MR), and measuring the first signal, and/or measuring the second signal, to obtain the measurement result comprises:

in case that the MR is in a sleep state, measuring, by the LP-WUR, the first signal and/or the second signal to obtain the measurement result, and/or in case that the MR is in a wake-up state, measuring, by the MR, the second signal to obtain the measurement result; or
in case that the MR is in a sleep state, measuring, by the MR, the second signal based on a first trigger signal to obtain the measurement result.

**11.** The method of claim 10, wherein in case that the MR is in the sleep state, measuring, by the LP-WUR, the first signal and/or the second signal to obtain the measurement result, and/or in case that the MR is in the wake-up state, measuring, by the MR, the second signal to obtain the measurement result comprises:

in case that the MR is in the sleep state, measuring, by the LP-WUR, the first signal to obtain a first measurement quantity, and/or measuring, by the LP-WUR, the second signal to obtain a second measurement quantity; and/or
in case that the first measurement quantity is less than or equal to a first threshold, or the second measurement quantity is less than or equal to a second threshold, and the MR is in the wake-up state, measuring, by the MR, the second signal to obtain a third measurement quantity,
wherein the measurement result comprises at least one of the first measurement quantity, the second measurement quantity, or the third measurement quantity.

**12.** The method of claim 11, wherein in case that the MR is in the sleep state, measuring, by the LP-WUR, the first signal to obtain the first measurement quantity, and/or measuring, by the LP-WUR, the second signal to obtain the second measurement quantity comprises:

in case that the LP-WUR is in the wake-up state, measuring, by the LP-WUR, the first signal in a first time window to obtain the first measurement quantity; and/or
in case that the LP-WUR is in the wake-up state, measuring, by the LP-WUR, the second signal in a second time window to obtain the second measurement quantity.

**13.** The method of claim 11, further comprising:

smoothing the first measurement quantity and the third measurement quantity to obtain a first smoothed result; and smoothing the second measurement quantity and the third measurement quantity to obtain a second smoothed result.

**14.** The method of claim 10, wherein in case that the MR is in the sleep state, measuring, by the MR, the second signal based on the first trigger signal to obtain the measurement result comprises:

in case that the MR is in the sleep state, transmitting, by the LP-WUR, the first trigger signal to the MR after receiving the LP-WUS; and measuring, by the MR, in a third time window, the second signal based on the first trigger signal to obtain a fourth measurement quantity,
wherein the measurement result comprises the fourth measurement quantity.

**15.** The method of claim 2, wherein the terminal comprises a first terminal and a second terminal, and measuring the first signal, and/or measuring the second signal, to obtain the measurement result comprises:

in case that the second terminal is in a sleep state, measuring, by the first terminal, the first signal and/or the second signal to obtain the measurement result, and/or in case that the second terminal is in a wake-up state, measuring, by the second terminal, the second signal to obtain the measurement result; or
in case that the second terminal is in a sleep state, measuring, by the second terminal, the second signal based on a second trigger signal to obtain the measurement result.

**16.** The method of claim 15, wherein in case that the second terminal is in the sleep state, measuring, by the first terminal, the first signal and/or the second signal to obtain the measurement result, and/or in case that the second terminal is in the wake-up state, measuring, by the second terminal, the second signal to obtain the measurement result comprises:

in case that the second terminal is in the sleep state, measuring, by the first terminal, the first signal to obtain a fifth measurement quantity, and/or measuring, by the first terminal, the second signal to obtain a sixth measurement quantity; and/or
in case that the fifth measurement quantity is less than or equal to a third threshold, or the sixth measurement quantity is less than or equal to a fourth threshold, and the second terminal is in the wake-up state, measuring, by the second terminal, the second signal to obtain a seventh measurement quantity,

wherein the measurement result comprises at least one of the fifth measurement quantity, the sixth measurement quantity, or the seventh measurement quantity.

17. The method of claim 16, wherein in case that the second terminal is in the sleep state, measuring, by the first terminal, the first signal to obtain the fifth measurement quantity, and/or measuring, by the first terminal, the second signal to obtain the sixth measurement quantity comprises:

in case that the first terminal is in the wake-up state, measuring, by the first terminal, the first signal in a fourth time window to obtain the fifth measurement quantity; and/or

in case that the first terminal is in the wake-up state, measuring, by the first terminal, the second signal in a fifth time window to obtain the sixth measurement quantity.

18. The method of claim 15, wherein in case that the second terminal is in the sleep state, measuring, by the second terminal, the second signal based on the second trigger signal to obtain the measurement result comprises:

in case that the second terminal is in the sleep state, transmitting, by the first terminal, the second trigger signal to the second terminal after receiving the LP-WUS; and measuring, by the second terminal, in a sixth time window, the second signal based on the second trigger signal to obtain an eighth measurement quantity, wherein the measurement result comprises the eighth measurement quantity.

19. The method of claim 16, further comprising: smoothing the fifth measurement quantity and the seventh measurement quantity to obtain a third smoothed result; and smoothing the sixth measurement quantity and the seventh measurement quantity to obtain a fourth smoothed result.

20. The method of any of claims 10 to 19, further comprising:

receiving configuration information transmitted from the network device, wherein the configuration information comprises at least one of a time window parameter, a state parameter, or a measurement configuration parameter, wherein

the time window parameter comprises at least one of a first time window parameter, a second time window parameter, a third time window parameter, a fourth time window parameter, a fifth time window parameter, or a sixth time window parameter, wherein

the first time window parameter is used to indicate a first time window, and the first time window parameter comprises at least one of: a period of the first time window, a start time of the first time window, or an end time of the first time window;

the second time window parameter is used to indicate a second time window, and the second time window parameter comprises at least one of: a period of the second time window, a start time of the second time window, or an end time of the second time window;

the third time window parameter is used to indicate a third time window, and the third time window parameter comprises at least one of: a period of the third time window, a start time of the third time window, or an end time of the third time window;

the fourth time window parameter is used to indicate a fourth time window, and the fourth time window parameter comprises at least one of: a period of the fourth time window, a start time of the fourth time window, or an end time of the fourth time window;

the fifth time window parameter is used to indicate a fifth time window, and the fifth time window parameter comprises at least one of: a period of the fifth time window, a start time of the fifth time window, or an end time of the fifth time window; and

the sixth time window parameter is used to indicate a sixth time window, and the sixth time window parameter comprises at least one of: a period of the sixth time window, a start time of the sixth time window, or an end time of the sixth time window;

the state parameter comprises at least one of a first state parameter, a second state parameter, or a third state parameter, wherein

the first state parameter is used to indicate that the MR is in the sleep state or a second terminal is in the sleep state, and the first state parameter comprises at least one of a period of a first state, a first duration, or a start time of a first state;

the second state parameter is used to indicate that the MR is in the wake-up state or the second terminal is in the wake-up state, and the second state parameter comprises at least one of a period of a second state, a second duration, or a start time of a second state; and

the third state parameter is used to indicate that the LP-WUR is in the wake-up state or a first terminal is in the wake-up state, and the third state parameter comprises at least one of a period of a third state, a third duration, or a start time of a third state; and

the measurement configuration parameter comprises at least one of a measurement object, measurement reporting, a measurement identifier, a measurement quantity configuration, measurement threshold enabling, a measurement interval, or a measurement gap allocation.

21. The method of claim 20, wherein the configuration information is carried by one or more of:

a broadcast signal;
a protocol predefined signaling;
a higher layer preconfigured signaling; or
downlink control information (DCI).

22. A method for signal measurement, performed by a network device, comprising:

transmitting a signal to a terminal, wherein the signal comprises a first signal and/or a second signal, wherein
the first signal comprises a low power wake-up signal (LP-WUS) and/or a low power synchronizing signal (LP-SS); and/or
the second signal comprises a channel state information reference signal (CSI-RS) and/or a synchronization signal/physical broadcast channel (PBCH) block (SSB).

23. The method of claim 22, further comprising:

transmitting configuration information to the terminal, wherein the configuration information comprises at least one of a time window parameter, a state parameter, or a measurement configuration parameter, wherein
the time window parameter comprises at least one of a first time window parameter, a second time window parameter, a third time window parameter, a fourth time window parameter, a fifth time window parameter, or a sixth time window parameter, wherein
the first time window parameter is used to indicate a first time window, and the first time window parameter comprises at least one of: a period of the first time window, a start time of the first time window, or an end time of the first time window;
the second time window parameter is used to indicate a second time window, and the second time window parameter comprises at least one of: a period of the second time window, a start time of the second time window, or an end time of the second time window;
the third time window parameter is used to indicate a third time window, and the third time window parameter comprises at least one of: a period of the third time window, a start time of the third time window, or an end time of the third time window;
the fourth time window parameter is used to indicate a fourth time window, and the fourth time window parameter comprises at least one of: a period of the fourth time window, a start time of the fourth time window, or an end time of the fourth time window;
the fifth time window parameter is used to indicate a fifth time window, and the fifth time window parameter comprises at least one of: a period of the fifth time window, a start time of the fifth time window, or an end time of the fifth time window; and
the sixth time window parameter is used to indicate a sixth time window, and the sixth time window parameter comprises at least one of: a period of the sixth time window, a start time of the sixth time window, or an end time of the sixth time window;
the state parameter comprises at least one of a first state parameter, a second state parameter, or a third state parameter, wherein
the first state parameter is used to indicate that a master radio (MR) is in a sleep state or a second terminal is in a sleep state, and the first state parameter comprises at least one of a period of a first state, a first duration, or a start time of a first state;
the second state parameter is used to indicate that the MR is in a wake-up state or the second terminal is in a wake-up state, and the second state parameter comprises at least one of a period of a second state, a second duration, or a start time of a second state; and
the third state parameter is used to indicate that a low power wake-up receiver (LP-WUR) is in the wake-up state or a first terminal is in the wake-up state, and the third state parameter comprises at least one of a period of a third state, a third duration, or a start time of a third state; and
the measurement configuration parameter comprises at least one of a measurement object, measurement reporting, a measurement identifier, a measurement quantity configuration, measurement threshold enabling, a measurement interval, or a measurement gap allocation.

24. The method of claim 23, wherein the configuration information is carried by one or more of:

a broadcast signal;
a protocol predefined signaling;
a higher layer preconfigured signaling; or
downlink control information (DCI).

25. A terminal, comprising a memory, a transceiver and a processor,

wherein the memory is used for storing a computer program, the transceiver is used for receiving and transmitting data under control of the processor, and the processor is used for reading the computer program in the memory and performing following operations:

receiving a signal transmitted from a network device, wherein the signal comprises a first signal and/or a second signal; and
measuring the first signal, and/or measuring the second signal, to obtain a measurement result.

26. The terminal of claim 25, wherein the first signal comprises a low power wake-up signal (LP-WUS) and/or a low power synchronizing signal (LP-SS); and/or
the second signal comprises a channel state information reference signal (CSI-RS) and/or a synchronization signal/physical broadcast channel (PBCH) block (SSB).

27. The terminal of claim 25 or 26, wherein the measurement result comprises at least one of:

a received power parameter of the signal;
a signal-to-noise and interference ratio parameter of the signal; or
a received quality parameter of the signal.

28. The terminal of claim 27, wherein the received power parameter of the signal satisfies:

$$P = \frac{P_1^r + P_2^r + \dots + P_M^r}{M},$$

wherein P is the received power parameter of the signal; M is a number of measurement units comprised in a measurement bandwidth for the signal, and M is a positive integer greater than or equal to 1; and $P_i^r$ is received power of the signal in an i-th measurement unit of the measurement bandwidth, and $i \in [1, M]$.

29. The terminal of claim 27, wherein the signal-to-noise and interference ratio parameter of the signal satisfies:

$$S = \frac{S_1^r + S_2^r + \dots + S_M^r}{M},$$

wherein S is the signal-to-noise and interference ratio parameter of the signal; M is a number of measurement units comprised in a measurement bandwidth for the signal, and M is a positive integer greater than or equal to 1; and $S_i^r$ is a signal-to-noise and interference ratio of the signal in an i-th measurement unit of the measurement bandwidth, $i \in [1, M]$, and

$$S_i^r = \frac{P_i^r}{Z_i^r + G_i^r},$$

wherein $P_i^r$ is received power of the signal in the i-th measurement unit; $Z_i^r$ is received power of a noise signal in the i-th measurement unit; and $G_i^r$ is received power of an interference signal in the i-th measurement unit.

30. The terminal of claim 28 or 29, wherein the measurement unit is any of:

a resource element (RE);
a resource block (RB); or
a measurement bandwidth.

31. The terminal of claim 28 or 29, wherein

in case that the terminal comprises an inverse fast Fourier transform (IFFT) module, the measurement unit is any of: a resource element (RE), a resource block (RB), or a measurement bandwidth; or
in case that the terminal does not comprises an inverse fast Fourier transform (IFFT) module, the measurement unit is any of: a resource block (RB), or a measurement bandwidth.

32. The terminal of claim 27, wherein the received quality parameter of the signal satisfies:

$$Q = (N * P)/R,$$

wherein Q is the received quality parameter of the signal; N is a number of resource blocks (RBs) comprised in a measurement bandwidth for the signal, and N is a positive integer greater than or equal to 1; P is the received power parameter of the signal; and R is a received signal strength indicator of the signal.

33. The terminal of claim 32, wherein the received signal strength indicator satisfies:

$$R = \frac{P_1^o + P_2^o + \dots + P_K^o}{K},$$

wherein R is the received signal strength indicator of the signal; K is a number of orthogonal frequency division multiplexing (OFDM) symbols comprised in a measurement window for the signal, and K is an integer greater than or equal to 1; and $P_j^o$ is total received power of the signal, an interference signal, and a noise signal on a j-th OFDM symbol in the measurement window.

34. The terminal of claim 26, wherein the terminal comprises a low power wake-up receiver (LP-WUR) and a main radio (MR), and measuring the first signal, and/or measuring the second signal, to obtain the measurement result comprises:

in case that the MR is in a sleep state, measuring, by the LP-WUR, the first signal and/or the second signal to obtain the measurement result, and/or in case that the MR is in a wake-up state, measuring, by the MR, the second signal to obtain the measurement result; or
in case that the MR is in a sleep state, measuring, by the MR, the second signal based on a first trigger signal to obtain the measurement result.

35. The terminal of claim 34, wherein in case that the MR is in the sleep state, measuring, by the LP-WUR, the first signal and/or the second signal to obtain the measurement result, and/or in case that the MR is in the wake-up state, measuring, by the MR, the second signal to obtain the measurement result comprises:

in case that the MR is in the sleep state, measuring, by the LP-WUR, the first signal to obtain a first measurement quantity, and/or measuring, by the LP-WUR, the second signal to obtain a second measurement quantity; and/or
in case that the first measurement quantity is less than or equal to a first threshold, or the second measurement quantity is less than or equal to a second threshold, and the MR is in the wake-up state, measuring, by the MR, the second signal to obtain a third measurement quantity,
wherein the measurement result comprises at least one of the first measurement quantity, the second measurement quantity, or the third measurement quantity.

36. The terminal of claim 35, wherein in case that the MR is in the sleep state, measuring, by the LP-WUR, the first signal to obtain the first measurement quantity, and/or measuring, by the LP-WUR, the second signal to obtain the second measurement quantity comprises:

in case that the LP-WUR is in the wake-up state, measuring, by the LP-WUR, the first signal in a first time window to obtain the first measurement quantity; and/or
in case that the LP-WUR is in the wake-up state, measuring, by the LP-WUR, the second signal in a second time window to obtain the second measurement quantity.

37. The terminal of claim 35, wherein the processor is further used for reading the computer program in the memory and performing following operations:
smoothing the first measurement quantity and the third measurement quantity to obtain a first smoothed result; and smoothing the second measurement quantity and the third measurement quantity to obtain a second smoothed result.

38. The terminal of claim 34, wherein in case that the MR is in the sleep state, measuring, by the MR, the second signal based on the first trigger signal to obtain the measurement result comprises:

in case that the MR is in the sleep state, transmitting, by the LP-WUR, the first trigger signal to the MR after receiving the LP-WUS; and measuring, by the MR, in a third time window, the second signal based on the first trigger signal to obtain a fourth measurement quantity,
wherein the measurement result comprises the fourth measurement quantity.

39. The terminal of claim 26, wherein the terminal comprises a first terminal and a second terminal, and measuring the first signal, and/or measuring the second signal, to obtain the measurement result comprises:

in case that the second terminal is in a sleep state, measuring, by the first terminal, the first signal and/or the second signal to obtain the measurement result, and/or in case that the second terminal is in a wake-up state, measuring, by the second terminal, the second signal to obtain the measurement result; or
in case that the second terminal is in a sleep state, measuring, by the second terminal, the second signal based on a second trigger signal to obtain the measurement result.

40. The terminal of claim 39, wherein in case that the second terminal is in the sleep state, measuring, by the first terminal, the first signal and/or the second signal to obtain the measurement result, and/or in case that the second terminal is in the wake-up state, measuring, by the second terminal, the second signal to obtain the measurement result comprises:

in case that the second terminal is in the sleep state, measuring, by the first terminal, the first signal to obtain a fifth measurement quantity, and/or measuring, by the first terminal, the second signal to obtain a sixth measurement quantity; and/or
in case that the fifth measurement quantity is less than or equal to a third threshold, or the sixth measurement quantity is less than or equal to a fourth threshold, and the second terminal is in the wake-up state, measuring, by the second terminal, the second signal to obtain a seventh measurement quantity,

wherein the measurement result comprises at least one of the fifth measurement quantity, the sixth measurement quantity, or the seventh measurement quantity.

41. The terminal of claim 40, wherein in case that the second terminal is in the sleep state, measuring, by the first terminal, the first signal to obtain the fifth measurement quantity, and/or measuring, by the first terminal, the second signal to obtain the sixth measurement quantity comprises:

in case that the first terminal is in the wake-up state, measuring, by the first terminal, the first signal in a fourth time window to obtain the fifth measurement quantity; and/or
in case that the first terminal is in the wake-up state, measuring, by the first terminal, the second signal in a fifth time window to obtain the sixth measurement quantity.

42. The terminal of claim 39, wherein in case that the second terminal is in the sleep state, measuring, by the second terminal, the second signal based on the second trigger signal to obtain the measurement result comprises:

in case that the second terminal is in the sleep state, transmitting, by the first terminal, the second trigger signal to the second terminal after receiving the LP-WUS; and measuring, by the second terminal, in a sixth time window, the second signal based on the second trigger signal to obtain an eighth measurement quantity, wherein the measurement result comprises the eighth measurement quantity.

43. The terminal of claim 40, wherein the processor is further used for reading the computer program in the memory and performing following operations:
smoothing the fifth measurement quantity and the seventh measurement quantity to obtain a third smoothed result; and smoothing the sixth measurement quantity and the seventh measurement quantity to obtain a fourth smoothed result.

44. The terminal of any of claims 34 to 43, wherein the processor is further used for reading the computer program in the memory and performing following operations:

receiving configuration information transmitted from the network device, wherein the configuration information comprises at least one of a time window parameter, a state parameter, or a measurement configuration parameter, wherein
the time window parameter comprises at least one of a first time window parameter, a second time window parameter, a third time window parameter, a fourth time window parameter, a fifth time window parameter, or a sixth time window parameter, wherein
the first time window parameter is used to indicate a first time window, and the first time window parameter comprises at least one of: a period of the first time window, a start time of the first time window, or an end time of the first time window;
the second time window parameter is used to indicate a second time window, and the second time window parameter comprises at least one of: a period of the second time window, a start time of the second time window, or an end time of the second time window;
the third time window parameter is used to indicate a third time window, and the third time window parameter comprises at least one of: a period of the third time window, a start time of the third time window, or an end time of the third time window;
the fourth time window parameter is used to indicate a fourth time window, and the fourth time window parameter comprises at least one of: a period of the fourth time window, a start time of the fourth time window, or an end time of the fourth time window;
the fifth time window parameter is used to indicate a fifth time window, and the fifth time window parameter comprises at least one of: a period of the fifth time window, a start time of the fifth time window, or an end time of the fifth time window; and
the sixth time window parameter is used to indicate a sixth time window, and the sixth time window parameter comprises at least one of: a period of the sixth time window, a start time of the sixth time window, or an end time of the sixth time window;
the state parameter comprises at least one of a first state parameter, a second state parameter, or a third state parameter, wherein
the first state parameter is used to indicate that the MR is in the sleep state or a second terminal is in the sleep state, and the first state parameter comprises at least one of a period of a first state, a first duration, or a start time of a first state;
the second state parameter is used to indicate that the MR is in the wake-up state or the second terminal is in the wake-up state, and the second state parameter comprises at least one of a period of a second state, a second duration, or a start time of a second state; and

the third state parameter is used to indicate that the LP-WUR is in the wake-up state or a first terminal is in the wake-up state, and the third state parameter comprises at least one of a period of a third state, a third duration, or a start time of a third state; and

the measurement configuration parameter comprises at least one of a measurement object, measurement reporting, a measurement identifier, a measurement quantity configuration, measurement threshold enabling, a measurement interval, or a measurement gap allocation.

45. The terminal of claim 44, wherein the configuration information is carried by one or more of:

a broadcast signal;
a protocol predefined signaling;
a higher layer preconfigured signaling; or
downlink control information (DCI).

46. A network device, comprising a memory, a transceiver and a processor,
wherein the memory is used for storing a computer program, the transceiver is used for receiving and transmitting data under control of the processor, and the processor is used for reading the computer program in the memory and performing following operations:

transmitting a signal to a terminal, wherein the signal comprises a first signal and/or a second signal, wherein
the first signal comprises a low power wake-up signal (LP-WUS) and/or a low power synchronizing signal (LP-SS); and/or
the second signal comprises a channel state information reference signal (CSI-RS) and/or a synchronization signal/physical broadcast channel (PBCH) block (SSB).

47. The network device of claim 46, wherein the processor is further used for reading the computer program in the memory and performing following operations:

transmitting configuration information to the terminal, wherein the configuration information comprises at least one of a time window parameter, a state parameter, or a measurement configuration parameter, wherein
the time window parameter comprises at least one of a first time window parameter, a second time window parameter, a third time window parameter, a fourth time window parameter, a fifth time window parameter, or a sixth time window parameter, wherein

the first time window parameter is used to indicate a first time window, and the first time window parameter comprises at least one of: a period of the first time window, a start time of the first time window, or an end time of the first time window;

the second time window parameter is used to indicate a second time window, and the second time window parameter comprises at least one of: a period of the second time window, a start time of the second time window, or an end time of the second time window;

the third time window parameter is used to indicate a third time window, and the third time window parameter comprises at least one of: a period of the third time window, a start time of the third time window, or an end time of the third time window;

the fourth time window parameter is used to indicate a fourth time window, and the fourth time window parameter comprises at least one of: a period of the fourth time window, a start time of the fourth time window, or an end time of the fourth time window;

the fifth time window parameter is used to indicate a fifth time window, and the fifth time window parameter comprises at least one of: a period of the fifth time window, a start time of the fifth time window, or an end time of the fifth time window; and

the sixth time window parameter is used to indicate a sixth time window, and the sixth time window parameter comprises at least one of: a period of the sixth time window, a start time of the sixth time window, or an end time of the sixth time window;

the state parameter comprises at least one of a first state parameter, a second state parameter, or a third state parameter, wherein

the first state parameter is used to indicate that a master radio (MR) is in a sleep state or a second terminal is in a sleep state, and the first state parameter comprises at least one of a period of a first state, a first duration, or a start time of a first state;

the second state parameter is used to indicate that the MR is in a wake-up state or the second terminal is in a wake-up state, and the second state parameter comprises at least one of a period of a second state, a second duration, or a start time of a second state; and

the third state parameter is used to indicate that a low power wake-up receiver (LP-WUR) is in the wake-up state or a first terminal is in the wake-up state, and the third state parameter comprises at least one of a period of a third state, a third duration, or a start time of a third state; and

the measurement configuration parameter comprises at least one of a measurement object, measurement reporting, a measurement identifier, a measurement quantity configuration, measurement threshold enabling, a measurement interval, or a measurement gap allocation.

48. The network device of claim 47, wherein the configuration information is carried by one or more of:

   a broadcast signal;
   a protocol predefined signaling;
   a higher layer preconfigured signaling; or
   downlink control information (DCI).

49. An apparatus for signal measurement, comprising:

   a receiving module, used for receiving a signal transmitted from a network device, wherein the signal comprises a first signal and/or a second signal; and
   a measuring module, used for measuring the first signal, and/or measuring the second signal, to obtain a measurement result.

50. The apparatus of claim 49, wherein the first signal comprises a low power wake-up signal (LP-WUS) and/or a low power synchronizing signal (LP-SS); and/or
   the second signal comprises a channel state information reference signal (CSI-RS) and/or a synchronization signal/physical broadcast channel (PBCH) block (SSB).

51. The apparatus of claim 49 or 50, wherein the measurement result comprises at least one of:

   a received power parameter of the signal;
   a signal-to-noise and interference ratio parameter of the signal; or
   a received quality parameter of the signal.

52. The apparatus of claim 51, wherein the received power parameter of the signal satisfies:

$$P = \frac{P_1^r + P_2^r + \ldots + P_M^r}{M},$$

wherein P is the received power parameter of the signal; M is a number of measurement units comprised in a measurement bandwidth for the signal, and M is a positive integer greater than or equal to 1; and $P_i^r$ is received power of the signal in an i-th measurement unit of the measurement bandwidth, and $i \in [1, M]$.

53. The apparatus of claim 51, wherein the signal-to-noise and interference ratio parameter of the signal satisfies:

$$S = \frac{S_1^r + S_2^r + \ldots + S_M^r}{M},$$

wherein S is the signal-to-noise and interference ratio parameter of the signal; M is a number of measurement units comprised in a measurement bandwidth for the signal, and M is a positive integer greater than or equal to 1; and $S_i^r$ is a signal-to-noise and interference ratio of the signal in an i-th measurement unit of the measurement bandwidth, $i \in [1, M]$, and

$$S_i^r = \frac{P_i^r}{Z_i^r + G_i^r},$$

wherein $P_i^r$ is received power of the signal in the i-th measurement unit; $Z_i^r$ is received power of a noise signal in the i-th measurement unit; and $G_i^r$ is received power of an interference signal in the i-th measurement unit.

54. The apparatus of claim 52 or 53, wherein the measurement unit is any of:

   a resource element (RE);
   a resource block (RB); or
   a measurement bandwidth.

55. The apparatus of claim 52 or 53, wherein

   in case that a terminal comprises an inverse fast Fourier transform (IFFT) module, the measurement unit is any of: a resource element (RE), a resource block (RB), or a measurement bandwidth; or
   in case that a terminal does not comprises an inverse fast Fourier transform (IFFT) module, the measurement unit is any of: a resource block (RB), or a measurement bandwidth.

56. The apparatus of claim 51, wherein the received quality parameter of the signal satisfies:

$$Q = (N * P)/R,$$

wherein Q is the received quality parameter of the signal; N is a number of resource blocks (RBs) comprised in a measurement bandwidth for the signal, and N is a positive integer greater than or equal to 1; P is the received power parameter of the signal; and R is a received signal strength indicator of the signal.

**57.** The apparatus of claim 56, wherein the received signal strength indicator satisfies:

$$R = \frac{P_1^o + P_2^o + \dots + P_K^o}{K},$$

wherein R is the received signal strength indicator of the signal; K is a number of orthogonal frequency division multiplexing (OFDM) symbols comprised in a measurement window for the signal, and K is an integer greater than or equal to 1; and $P_j^o$ is total received power of the signal, an interference signal, and a noise signal on a j-th OFDM symbol in the measurement window.

**58.** The apparatus of claim 50, wherein a terminal comprises a low power wake-up receiver (LP-WUR) and a main radio (MR), and the measuring module is used for:

in case that the MR is in a sleep state, measuring, by the LP-WUR, the first signal and/or the second signal to obtain the measurement result, and/or in case that the MR is in a wake-up state, measuring, by the MR, the second signal to obtain the measurement result; or
in case that the MR is in a sleep state, measuring, by the MR, the second signal based on a first trigger signal to obtain the measurement result.

**59.** The apparatus of claim 58, wherein in case that the MR is in the sleep state, the measuring module is used for:

in case that the MR is in the sleep state, measuring, by the LP-WUR, the first signal to obtain a first measurement quantity, and/or measuring, by the LP-WUR, the second signal to obtain a second measurement quantity; and/or
in case that the first measurement quantity is less than or equal to a first threshold, or the second measurement quantity is less than or equal to a second threshold, and the MR is in the wake-up state, measuring, by the MR, the second signal to obtain a third measurement quantity,
wherein the measurement result comprises at least one of the first measurement quantity, the second measurement quantity, or the third measurement quantity.

**60.** The apparatus of claim 59, wherein in case that the MR is in the sleep state, the measuring module is used for:

in case that the LP-WUR is in the wake-up state, measuring, by the LP-WUR, the first signal in a first time window to obtain the first measurement quantity; and/or
in case that the LP-WUR is in the wake-up state, measuring, by the LP-WUR, the second signal in a second time window to obtain the second measurement quantity.

**61.** The apparatus of claim 59, wherein the measuring module is further used for
smoothing the first measurement quantity and the third measurement quantity to obtain a first smoothed result; and smoothing the second measurement quantity and the third measurement quantity to obtain a second smoothed result.

**62.** The apparatus of claim 58, wherein in case that the MR is in the sleep state, the measuring module is used for:

in case that the MR is in the sleep state, transmitting, by the LP-WUR, the first trigger signal to the MR after receiving the LP-WUS; and measuring, by the MR, in a third time window, the second signal based on the first trigger signal to obtain a fourth measurement quantity,
wherein the measurement result comprises the fourth measurement quantity.

**63.** The apparatus of claim 50, wherein a terminal comprises a first terminal and a second terminal, and the measuring module is used for:

in case that the second terminal is in a sleep state, measuring, by the first terminal, the first signal and/or the second signal to obtain the measurement result, and/or in case that the second terminal is in a wake-up state, measuring, by the second terminal, the second signal to obtain the measurement result; or
in case that the second terminal is in a sleep state, measuring, by the second terminal, the second signal based on a second trigger signal to obtain the measurement result.

**64.** The apparatus of claim 63, wherein in case that the second terminal is in the sleep state, the measuring module is used for:

in case that the second terminal is in the sleep state, measuring, by the first terminal, the first signal to obtain a fifth measurement quantity, and/or measuring, by the first terminal, the second signal to obtain a sixth measurement quantity; and/or
in case that the fifth measurement quantity is less than or equal to a third threshold, or the sixth measurement quantity is less than or equal to a fourth threshold, and the second terminal is in the wake-up state, measuring, by the second terminal, the second signal to obtain a seventh measurement quantity, wherein the measurement result comprises at least one of the fifth measurement quantity, the sixth measurement quantity, or the seventh measurement quantity.

65. The apparatus of claim 64, wherein in case that the second terminal is in the sleep state, the measuring module is used for:

in case that the first terminal is in the wake-up state, measuring, by the first terminal, the first signal in a fourth time window to obtain the fifth measurement quantity; and/or
in case that the first terminal is in the wake-up state, measuring, by the first terminal, the second signal in a fifth time window to obtain the sixth measurement quantity.

66. The apparatus of claim 63, wherein in case that the second terminal is in the sleep state, the measuring module is used for:

in case that the second terminal is in the sleep state, transmitting, by the first terminal, the second trigger signal to the second terminal after receiving the LP-WUS; and measuring, by the second terminal, in a sixth time window, the second signal based on the second trigger signal to obtain an eighth measurement quantity, wherein the measurement result comprises the eighth measurement quantity.

67. The apparatus of claim 64, wherein the measuring module is further used for:
smoothing the fifth measurement quantity and the seventh measurement quantity to obtain a third smoothed result; and smoothing the sixth measurement quantity and the seventh measurement quantity to obtain a fourth smoothed result.

68. The apparatus of any of claims 58 to 67, wherein the receiving module is further used for:

receiving configuration information transmitted from the network device, wherein the configuration information comprises at least one of a time window parameter, a state parameter, or a measurement configuration parameter, wherein
the time window parameter comprises at least one of a first time window parameter, a second time window parameter, a third time window parameter, a fourth time window parameter, a fifth time window parameter, or a sixth time window parameter, wherein
the first time window parameter is used to indicate a first time window, and the first time window parameter comprises at least one of: a period of the first time window, a start time of the first time window, or an end time of the first time window;
the second time window parameter is used to indicate a second time window, and the second time window parameter comprises at least one of: a period of the second time window, a start time of the second time window, or an end time of the second time window;
the third time window parameter is used to indicate a third time window, and the third time window parameter comprises at least one of: a period of the third time window, a start time of the third time window, or an end time of the third time window;
the fourth time window parameter is used to indicate a fourth time window, and the fourth time window parameter comprises at least one of: a period of the fourth time window, a start time of the fourth time window, or an end time of the fourth time window;
the fifth time window parameter is used to indicate a fifth time window, and the fifth time window parameter comprises at least one of: a period of the fifth time window, a start time of the fifth time window, or an end time of the fifth time window; and
the sixth time window parameter is used to indicate a sixth time window, and the sixth time window parameter comprises at least one of: a period of the sixth time window, a start time of the sixth time window, or an end time of the sixth time window;
the state parameter comprises at least one of a first state parameter, a second state parameter, or a third state parameter, wherein
the first state parameter is used to indicate that the MR is in the sleep state or a second terminal is in the sleep state, and the first state parameter comprises at least one of a period of a first state, a first duration, or a start time of a first state;
the second state parameter is used to indicate that the MR is in the wake-up state or the second terminal is in the wake-up state, and the second state parameter comprises at least one of a period of a second state, a second duration, or a start time of a second state; and
the third state parameter is used to indicate that the LP-WUR is in the wake-up state or a first terminal is in the wake-up state, and the third state parameter comprises at least one of a period of a third state, a third duration, or a start time of a third state; and
the measurement configuration parameter comprises at least one of a measurement object, measurement reporting, a measurement identifier, a measurement quantity configuration, measurement threshold enabling, a measurement interval, or a measurement gap allocation.

69. The apparatus of claim 68, wherein the configuration information is carried by one or more of:

a broadcast signal;
a protocol predefined signaling;
a higher layer preconfigured signaling; or
downlink control information (DCI).

70. An apparatus for signal measurement, comprising:

a transmitting module, used for transmitting a signal to a terminal, wherein the signal comprises a first signal and/or a second signal, wherein
the first signal comprises a low power wake-up signal (LP-WUS) and/or a low power synchronizing signal (LP-SS); and/or
the second signal comprises a channel state information reference signal (CSI-RS) and/or a synchronization signal/physical broadcast channel (PBCH) block (SSB).

71. The apparatus of claim 70, wherein the transmitting module is further used for:

transmitting configuration information to the terminal, wherein the configuration information comprises at least one of a time window parameter, a state parameter, or a measurement configuration parameter, wherein
the time window parameter comprises at least one of a first time window parameter, a second time window parameter, a third time window parameter, a fourth time window parameter, a fifth time window parameter, or a sixth time window parameter, wherein
the first time window parameter is used to indicate a first time window, and the first time window parameter comprises at least one of: a period of the first time window, a start time of the first time window, or an end time of the first time window;
the second time window parameter is used to indicate a second time window, and the second time window parameter comprises at least one of: a period of the second time window, a start time of the second time window, or an end time of the second time window;
the third time window parameter is used to indicate a third time window, and the third time window parameter comprises at least one of: a period of the third time window, a start time of the third time window, or an end time of the third time window;

the fourth time window parameter is used to indicate a fourth time window, and the fourth time window parameter comprises at least one of: a period of the fourth time window, a start time of the fourth time window, or an end time of the fourth time window;
the fifth time window parameter is used to indicate a fifth time window, and the fifth time window parameter comprises at least one of: a period of the fifth time window, a start time of the fifth time window, or an end time of the fifth time window; and
the sixth time window parameter is used to indicate a sixth time window, and the sixth time window parameter comprises at least one of: a period of the sixth time window, a start time of the sixth time window, or an end time of the sixth time window;
the state parameter comprises at least one of a first state parameter, a second state parameter, or a third state parameter, wherein
the first state parameter is used to indicate that a master radio (MR) is in a sleep state or a second terminal is in a sleep state, and the first state parameter comprises at least one of a period of a first state, a first duration, or a start time of a first state;
the second state parameter is used to indicate that the MR is in a wake-up state or the second terminal is in a wake-up state, and the second state parameter comprises at least one of a period of a second state, a second duration, or a start time of a second state; and
the third state parameter is used to indicate that a low power wake-up receiver (LP-WUR) is in the wake-up state or a first terminal is in the wake-up state, and the third state parameter comprises at least one of a period of a third state, a third duration, or a start time of a third state; and
the measurement configuration parameter comprises at least one of a measurement object, measurement reporting, a measurement identifier, a measurement quantity configuration, measurement threshold enabling, a measurement interval, or a measurement gap allocation.

72. The apparatus of claim 71, wherein the configuration information is carried by one or more of:

a broadcast signal;
a protocol predefined signaling;
a higher layer preconfigured signaling; or
downlink control information (DCI).

73. A computer-readable storage medium storing a computer program, wherein the computer program is used for causing a computer to perform the meth-

**EP 4 668 886 A1**

ods of any of claims 1 to 24.

Terminal

LP-WUS → LP-WUR → Trigger Signal → MR

FIG. 1

| Receiving a signal transmitted from a network device, where the signal includes a first signal and/or a second signal | S21 |

| Measuring the first signal, and/or measuring the second signal, to obtain a measurement result | S22 |

FIG. 2

32

Network
device

First device
(LP-WUR/first terminal)

311

Second device
(MR/second terminal)

312

31

FIG. 3

FIG. 4

FIG. 5

FIG. 6

FIG. 7

FIG. 8

FIG. 9

FIG. 10

## INTERNATIONAL SEARCH REPORT

| International application No. |
| --- |
| **PCT/CN2024/072750** |

| A. | CLASSIFICATION OF SUBJECT MATTER |
| --- | --- |

H04W52/02(2009.01)i

According to International Patent Classification (IPC) or to both national classification and IPC

| B. | FIELDS SEARCHED |
| --- | --- |

Minimum documentation searched (classification system followed by classification symbols)

IPC: H04W H04L

Documentation searched other than minimum documentation to the extent that such documents are included in the fields searched

Electronic data base consulted during the international search (name of data base and, where practicable, search terms used)

CNTXT, ENTXT, DWPI, 3GPP: 信号, 测量, 极低功率唤醒信号, 极低功率同步信号, 信道状态参考信号, 同步信号块, 接收功率, 信干噪比, 接收质量, 唤醒信号, 省电, 节能, signal, RRM, measurement, LP-WUS, LP-SS, CSI-RS, SSB, WUS, RSRP, receiving quality, SINR, power saving

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | SAMSUNG. "Signal Design and Procedure for LP-WUS" *3GPP TSG RAN WG1 #112, R1-2301291*, 03 March 2023 (2023-03-03), section 3.5 | 1-73 |
| PX | WO 2023159472 A1 (GUANGDONG OPPO MOBILE TELECOMMUNICATIONS CORP., LTD.) 31 August 2023 (2023-08-31) description, page 4, line 14-page 5, line 14, and page 7, line 18-page 9, line 6 | 1-73 |
| X | CN 110035447 A (VIVO MOBILE COMMUNICATION CO., LTD.) 19 July 2019 (2019-07-19) description, paragraphs [0025]-[0112] | 1-73 |
| X | APPLE. "On Rel-18 Low Power Wake Up Radio" *3GPP TSG RAN Meeting #93-E, RP-212367*, 17 September 2021 (2021-09-17), section 2 | 1-73 |
| Y | CN 110035447 A (VIVO MOBILE COMMUNICATION CO., LTD.) 19 July 2019 (2019-07-19) description, paragraphs [0025]-[0112] | 1-73 |

☑ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **11 March 2024** | **21 March 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
|---|
| **PCT/CN2024/072750** |

### C.   DOCUMENTS CONSIDERED TO BE RELEVANT

| Category* | Citation of document, with indication, where appropriate, of the relevant passages | Relevant to claim No. |
|---|---|---|
| Y | APPLE. "On Rel-18 Low Power Wake Up Radio" <br> *3GPP TSG RAN Meeting #93-E, RP-212367,* 17 September 2021 (2021-09-17), <br>      section 2 | 1-73 |
| A | WO 2021128210 A1 (GUANGDONG OPPO MOBILE TELECOMMUNICATIONS CORP., LTD.) 01 July 2021 (2021-07-01) <br>      entire document | 1-73 |

Form PCT/ISA/210 (second sheet) (July 2022)

## INTERNATIONAL SEARCH REPORT
### Information on patent family members

| International application No. |
| --- |
| **PCT/CN2024/072750** |

| Patent document cited in search report | Publication date (day/month/year) | Patent family member(s) | Publication date (day/month/year) |
| --- | --- | --- | --- |
| WO 2023159472 A1 | 31 August 2023 | None | |
| CN 110035447 A | 19 July 2019 | None | |
| WO 2021128210 A1 | 01 July 2021 | CN 114503486 A | 13 May 2022 |

Form PCT/ISA/210 (patent family annex) (July 2022)

**REFERENCES CITED IN THE DESCRIPTION**

**Patent documents cited in the description**

- CN 202310131603

- CN 202310472047